(19) Europäisches Patentamt
European Patent Office
Office européen des brevets

(11) EP 3 439 076 A1

(12) EUROPEAN PATENT APPLICATION
published in accordance with Art. 153(4) EPC

(43) Date of publication:
**06.02.2019 Bulletin 2019/06**

(21) Application number: **17774529.6**

(22) Date of filing: **21.03.2017**

(51) Int Cl.:
***H01M 4/13*** (2010.01) ***H01M 4/02*** (2006.01)
***H01M 4/04*** (2006.01) ***H01M 4/139*** (2010.01)
***H01M 10/0525*** (2010.01)

(86) International application number:
**PCT/JP2017/011260**

(87) International publication number:
**WO 2017/169988 (05.10.2017 Gazette 2017/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **30.03.2016 JP 2016068321**

(71) Applicant: **NEC Energy Devices, Inc.**
**Chuo-ku**
**Sagamihara-shi, Kanagawa 252-5298 (JP)**

(72) Inventors:
- **KATOU Yuukou**
  **Sagamihara-shi**
  **Kanagawa 252-5298 (JP)**
- **KONO Yasutaka**
  **Sagamihara-shi**
  **Kanagawa 252-5298 (JP)**

(74) Representative: **Glawe, Delfs, Moll**
**Partnerschaft mbB von**
**Patent- und Rechtsanwälten**
**Postfach 13 03 91**
**20103 Hamburg (DE)**

# (54) ELECTRODE, METHOD FOR MANUFACTURING SAME, AND SECONDARY CELL

(57) The present invention has an object to provide a lithium secondary battery having excellent battery characteristics and an electrode materializing the battery, by making it easy for an electrolyte solution or a solid electrolyte being an ionic conductor to penetrate between active materials even under a low porosity condition, in a technique for raising the electrode density by making the porosity of the electrode low in order to raise the energy density. The present invention relates to an electrode for a secondary battery comprising a first electrode, a second electrode, a separating layer for spatially separating these electrodes, and an ionic conductor, the electrode comprising a current collector and an active material-containing film on the current collector, wherein a porosity per volume of the active material-containing film is 25% or less; and one or more high-porosity regions where a ratio of a maximum porosity to a minimum porosity by a trend analysis of porosity per area in the film thickness direction of an electrode cross-section is 2.2 or more are present within a range of 500 μm in radius on the electrode plane.

FIG. 2

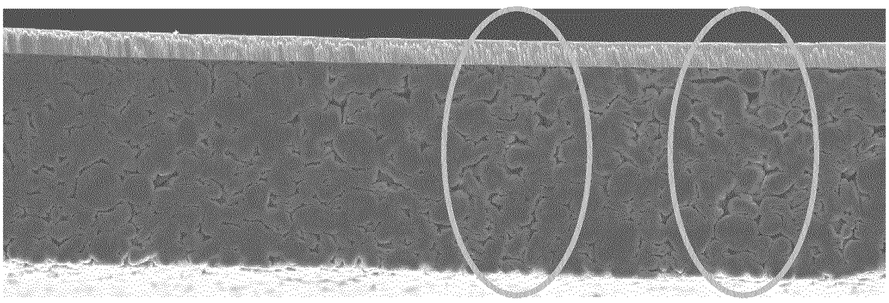

EP 3 439 076 A1

## Description

### Technical Field

The present invention relates to an electrode and a method for manufacturing the same, and a secondary battery.

### Background Art

Lithium secondary batteries (lithium ion secondary batteries), since having a small size and a large capacity, are broadly utilized in applications such as portable electronic devices and personal computers. In the rapid advancement of portable electronic devices and the realization of the utilization to electric cars in recent years, however, further improvement of the energy density in a limited volume becomes an important technical object.

Although some methods for raising the energy density of lithium ion secondary batteries are conceivably, raising the density of electrodes is effective among them.

Usual secondary batteries comprises a positive electrode in which active material layers containing an active material to occlude and release ions are formed on a metal current collector thin film, a negative electrode in which negative electrode active material layers are similarly formed on a current collector thin film, a separating layer to electrically separate the both, and an ionic conductor to transport ions through the separating layer between the both, and have a structure in which these are laminated.

In such a structure, the current collectors and the separating layer are each several micrometers to about 20 μm, while the positive electrode active material layers and the negative electrode active material layers are formed, respectively, in a thickness of about 100 μm on both surfaces of the current collectors and thus the active material layers alone come to have a thickness of about 400 μm.

For example, in the case where carbon powder is used as the negative electrode active material, the density of the active material layer is about 1.1 $g/cm^3$ at the time when a slurry of the carbon powder mixed with a solvent is coated and dried at about 120°C. In the case where a pressure is applied on the active material layer to compress the active material layer to 1.5 $g/cm^3$, the thickness can be reduced from 100 μm to 73 μm.

Raising the electrode densities and reducing the thicknesses of both a positive electrode and a negative electrode in such a way is effective means for raising the energy density per volume, since the battery volume can be reduced.

Patent Literature 1 describes a lithium ion secondary battery comprising a negative electrode composed of a negative electrode mixture containing a negative electrode active material capable of occluding and releasing lithium, a positive electrode composed of a positive electrode mixture containing a positive electrode active material composed of a composite oxide containing lithium, and an electrolyte, wherein at least one of the mixtures is disposed with density differences in the planar direction of a current collector. It is also stated that such a battery is excellent in a high-rate discharge characteristic and can suppress the temperature rise in the high-rate discharging.

Patent Literature 2 describes an electrolyte solution for a secondary battery containing an acyclic carboxylate ester or a halogen-substituted carbonate ester whose main skeleton carbons are saturated. It is also stated that use of such an electrolyte solution can suppress lowering in the capacity along with cycles of a nonaqueous electrolyte secondary battery and reduction in the reliability at high temperatures, and can improve the operating voltage.

Non Patent Literature 1 reports that release of Li ions is caused with a reaction point as a starting point of the release, and extends in evaluation of an olivine positive electrode (Figure 10).

### Citation List

#### Patent Literature

Patent Literature 1: JP10-64514A
Patent Literature 2: JP2009-123707A

#### Non Patent Literature

Non Patent Literature 1: Hisao Yamashige (Toyota Motor Corp., Material Technology Development Department), "Analysis of Lithium Ion Battery Material by Synchrotron XAFS Method", [online], March 28, 2014, Meeting for Presentation of Results on Subjects for Opened Gratuitous Utilization by Aichi Synchrotron Radiation Center, internet<http://www.astf-kha.jp/synchrotron/userguide/files/20140328_1.pdf>

## Summary of Invention

### Technical Problem

Since a battery operates by occlusion and release of ions in an ionic conductor by an active material of an electrode, it is desirable that the area where the active material and the ionic conductor contact with each other is large. If the electrode density is raised in order to make the contact area large, however, since gaps between the active materials decrease, isolated voids are formed and it becomes difficult for an electrolyte solution or a solid electrolyte being the ionic conductor to penetrate from the electrode surface between the active materials. In such an electrode, since migration of ions becomes difficult, there arises such a problem that occlusion and release of ions become slow and battery characteristics such as charge and discharge speeds are deteriorated.

As a countermeasure to such a problem, it is desirable to increase the electrode density following forming regions where the ionic conductor penetrate into.

As a related technology, for example, as described in Patent Literature 1, there is utilization of a technique of disposing an active material discretely in the planar direction of a current collector. In Patent Literature 1, specifically, a dotted active material (mixture) having a diameter or maximum diagonal length of 3 mm or less in is formed on a current collector and the spacing between the dots is 0.5 mm or more. The case where the amount of the active material is largest is a case where one dot is a square of 3 mm in diagonal length and the spacing between the dots is 0.5 mm. At this time, the area occupancy rate of the dotted active material becomes (3 mm $\times$ 3 mm)/(3.5 mm $\times$ 3.5 mm) = 0.735 (73.5%). In this technique, the active material is only applied on the current collector and is not subjected to a treatment to raise the density; however, for example, even in the case where the density is made high until the porosity of dot portions becomes 0%, since there are regions where no active material is present, the porosity per unit volume as the electrode never becomes less than 100% - 73.5% = 26.5%.

The present invention has an object to provide a lithium secondary battery having excellent battery characteristics and an electrode materializing the battery, by making it easy for an electrolyte solution or a solid electrolyte being an ionic conductor to penetrate between active materials even under a low porosity condition, in a technique for raising the electrode density by making the porosity of the electrode low in order to raise the energy density.

### Solution to Problem

According to one aspect, there is provided an electrode for a secondary battery comprising a first electrode, a second electrode, a separating layer for spatially separating these electrodes, and an ionic conductor,
the electrode comprising a current collector and an active material-containing film on the current collector,
wherein the porosity per volume of the active material-containing film is 25% or less; and
one or more high-porosity regions where the ratio of a maximum porosity to a minimum porosity by a trend analysis of porosity per area in the film thickness direction of the electrode cross-section is 2.2 or more are present within a range of 500 $\mu$m in radius on the electrode plane.

According to another aspect, there is provided a method for manufacturing the above electrode, the method comprising:

a step of coating a slurry comprising an active material particle, a binder and a solvent on a current collector, wherein regions having different thicknesses are formed in the coating step; and
a step of applying a pressure on the entire surface of a coated film to raise the density thereof followed by the coating step.

According to another aspect, there is provided a method for manufacturing the above electrode, the method comprising:

a step of coating a slurry comprising an active material particle, a binder and a solvent on a current collector; and
a step of applying a pressure on the electrode by a roller having ruggedness followed by the coating step.

According to another aspect, there is provided a method for manufacturing the above electrode, the method comprising:

a step of coating a slurry comprising an active material particle, a binder and a solvent on a current collector;
a step of drying a coated film to generate cracks on the surface of the coated film followed by the coating step; and
a step of applying a pressure on the entire surface of the coated film after generating cracks.

According to another aspect, there is provided a secondary battery comprising a first electrode, a second electrode, a separating layer to spatially separate these electrodes, and an ionic conductor,
wherein the above electrode is used for at least one of the first electrode and the second electrode.

Advantageous Effects of Invention

According to an exemplary embodiment, there can be provided a lithium secondary battery having excellent battery characteristics and an electrode materializing the battery, in which it can be made easy for an electrolyte solution or a solid electrolyte being an ionic conductor to penetrate between active materials even under a low porosity condition, in a technique for raising the electrode density by making the porosity of the electrode low in order to raise the energy density.

Brief Description of Drawings

[Figure 1] Figure 1 is a schematic cross-sectional view to interpret a secondary battery according to an exemplary embodiment.
[Figure 2] Figure 2 is a SEM image of a cross-section (cross-section in the film thickness direction) of a negative electrode of Example 1.
[Figure 3] Figure 3 is a view indicating a dependence (before smoothing) of the porosity of the negative electrode of Example 1 on positions in the electrode planar direction.
[Figure 4] Figure 4 is a view indicating a dependence (after smoothing) of the porosity of the negative electrode of Example 1 on positions in the electrode planar direction.
[Figure 5] Figure 5 is a SEM image of a cross-section of a negative electrode of Comparative Example 1.
[Figure 6] Figure 6 is a view indicating a dependence (after smoothing) of the porosity of the negative electrode of Comparative Example 1 on positions in the electrode planar direction.
[Figure 7] Figure 7 is a SEM image of a cross-section of a negative electrode of Comparative Example 2.
[Figure 8] Figure 8 is a view indicating a dependence (after smoothing) of the porosity of the negative electrode of Comparative Example 2 on positions in the electrode planar direction.
[Figure 9] Figure 9 is a diagram indicating relations between the smoothing range and the porosity ratio.
[Figure 10] Figure 10 shows images indicating a growth process of a reaction distribution in the planar cross-sectional direction of an electrode.

Description of Embodiment

A secondary battery according to the present exemplary embodiment comprises a first electrode, a second electrode having a different potential from that of the first electrode in the operating time, a separating layer to spatially separating both the electrodes, and an ionic conductor contacting with the first or second electrode.
The first and second electrodes each comprise a current collector, and an active material-containing film formed on the corresponding current collector.
At least one of the first and second electrodes has a porosity per volume (volumetric porosity) of the active material-containing film of 25% or less, preferably 20% or less, and more preferably 15% or less.
Further, it is preferable that one or more high-porosity regions (hereinafter, suitably referred to as "high-porosity region H") where the ratio of a maximum porosity to a minimum porosity by a trend analysis of porosity per area (areal porosity) in the film thickness direction (in the direction perpendicular to the current collector plane) of an electrode cross-section (cross-section in the film thickness direction) is 2.2 or more is present within a range of the electrode plane 500 μm in radius on a given position in the electrode plane.
The above maximum porosity and minimum porosity can be determined by a trend analysis of porosity based on an image of an electrode cross-section (cross-section in the film thickness direction). At this time, it is preferable that in the electrode cross-section, the distribution (trend distribution) of porosity in image portions along the film thickness direction with respect to positions in the electrode planar direction (that is, current collector planar direction) is smoothed in a range of 35 to 70 μm in the electrode planar direction. Means of the smoothing is preferably approximation to a cubic expression using a least-squares method.
The electrode cross-section (cross-section in the film thickness direction) can be an electrode cross-section along a predetermined in-planar direction; and in any cross-section along the predetermined in-planar direction, it is preferable that one or more high-porosity regions H are present within a region of 1000 μm in the planar direction, and it is more preferable that one or more high-porosity regions H are present within a region of 500 μm in the planar direction.

Further a plurality of the electrode cross-sections can be taken, and the interval between the electrode cross-sections can be made 1000 μm or less.

The volumetric porosity means a proportion (percentage) of void portions in the active material-containing film on the current collector to a volume (including the void portions in the film) of the film. The void portions in the film is space portions excluding solid contents (for example, active material, conductive auxiliary agent and binder) constituting the film. In the secondary battery, the ionic conductor is present in the void portions (space portions).

The volumetric porosity can be determined as follows.

A difference between a volume of a solid-content material used and a volume determined from a thickness after pressing of an active material-containing film formed on a current collector is determined; the difference is taken as a volume of the voids; and a value obtained by dividing the volume of the voids by the volume of the active material-containing film after pressing can be taken as a volumetric porosity.

Alternatively, for the electrode after the fabrication, a cross-section is formed by an FIB (focused ion beam processing machine); void shapes are photographed; the position where a cross-section is formed is shifted and the photographing of void shapes is repeated; and the volumetric porosity can be acquired by re-constituting the 3D state in the electrode from the group of the taken cross-section images.

The areal porosity can be determined from an image analysis of an electrode cross-section. The areal porosity is a porosity indicating a trend in the in-planar direction of the porosity determined in the film thickness direction of the electrode cross-section; and the relation between the position in the in-planar direction and the porosity in the film thickness direction is approximated to a cubic expression in the range of 35 to 70 μm in the in-planer direction, and the porosity of the portion concerned can thereby be determined.

In the electrode according to the present exemplary embodiment, the porosity ratio (a ratio of a maximum porosity to a minimum porosity) is preferably 2.2 or more, and more preferably 2.3 or more. With a higher porosity ratio, penetration of the ionic conductor between the active materials becomes easier and charge migration also becomes easier, whereby battery characteristics such as charge and discharge speeds can be improved.

By contrast, from the viewpoint of the energy density, it is preferable from the viewpoint of the energy density that the volumetric porosity is low, and the volumetric porosity is preferably 25% or less. As the volumetric porosity decreases, however, since it becomes difficult for the minimum porosity to become low, making the porosity ratio high is likely to become difficult. Hence, the volumetric porosity is more preferably 10% or more.

Hereinafter, a preferred exemplary embodiment will be described further. Hereinafter, an electrode of a higher voltage in the charging time is called a positive electrode; an electrode of a lower voltage is called a negative electrode.

(Positive electrode)

A positive electrode of a lithium secondary battery according to the present exemplary embodiment is not especially limited as long as comprising, as a positive electrode active material, a material capable of intercalating and deintercalating lithium ions. There can be used, for example, a material of 4 V-class (average operating potential = 3.6 to 3.8 V: vs. lithium potential) such as $LiMn_2O_4$ or $LiCoO_2$. In these positive electrode active materials, the developing potential is established by a redox reaction ($Co^{+3}$ <--> $Co^{+4}$ or $Mn^{+3}$ <--> $Mn^{+4}$) of Co ions or Mn ions. There can further be used a lithium-containing composite oxide such as $LiM1O_2$ (M1 is at least one element selected from the group consisting of Mn, Fe, Co and Ni, and a part of Ml may be substituted by Mg, Al or Ti) or $LiMn_{2-x}M2_xO_4$ (M2 is at least one element selected from the group consisting of Mg, Al, Co, Ni, Fe and B, and $0 \leq x < 0.4$), an olivine-type material represented by $LiFePO_4$, or the like.

Then from the viewpoint of providing a high energy density, it is preferable that the positive electrode comprises a positive electrode active material having a potential of 4.5 V or more vs. lithium metal and being capable of intercalating and deintercalating lithium ions.

The positive electrode active material can be selected, for example, by the following method. First, a positive electrode comprising a positive electrode active material and a Li metal are disposed in the state of facing each other with a separator being interposed therebetween, in a battery case; and an electrolyte solution is injected to thereby fabricate a battery. Then, in the case where the battery is charged and discharged at a constant current to, for example, 5 mAh/g per mass of the positive electrode active material of the positive electrode, if the positive electrode active material has a charge and discharge capacity of 10 mAh/g or more per mass of the active material at potentials of 4.5 V or more vs. lithium, the positive electrode active material can be used as a positive electrode active material operating at potentials of 4.5 V or more vs. lithium.

It is known that, for example, by using, as an active material, a spinel compound in which Mn of lithium manganate is substituted by Ni, Co, Fe, Cu, Cr or the like, a 5 V-class operating potential can be materialized. Specifically, as described in Patent Literature 2, it is known that a spinel compound such as $LiNi_{0.5}Mn_{1.5}O_4$ exhibits a potential plateau in the region of 4.5 V or more. In such a spinel compound, Mn exists in the state of being tetravalent and the operating potential is established by the redox of $Ni^{2+}$ <--> $Ni^{4+}$ instead of that of $Mn^{3+}$ <--> $Mn^{4+}$.

For example, the $LiNi_{0.5}Mn_{1.5}O_4$ has a capacity of 130 mAh/g or more, and an average operating voltage of 4.6 V or more vs. metal lithium. Although the capacity is lower than $LiCoO_2$, the energy density of a battery is higher than $LiCoO_2$. Further the spinel-type lithium manganese composite oxides have three-dimensional lithium diffusion passages and are excellent in thermodynamical stability, and also have an advantage of being easily synthesized.

As active materials operating at potentials of 4.5 V or more vs. lithium, there is, for example, a lithium manganese composite oxide represented by the following formula (10). The lithium manganese composite oxide represented by the following formula (10) is an active material operating at potentials of 4.5 V or more vs. lithium.

$$Li_a(M_xMn_{2-x-y}Y_y)(O_{4-w}Z_w) \qquad (10)$$

wherein $0.3 \leq x \leq 1.2$, $0 \leq y$, $x + y < 2$, $0 \leq a \leq 1.2$ and $0 \leq w \leq 1$; M is at least one selected from the group consisting of Co, Ni, Fe, Cr and Cu; Y is at least one selected from the group consisting of Li, B, Na, Al, Mg, Ti, Si, K and Ca; and Z is at least one selected from the group consisting of F and Cl.

Further it is more preferable that the lithium manganese composite oxide represented by the formula (10) is a compound represented by the following formula (10-1).

$$Li_a(M_xMn_{2-x-y}Y_y)(O_{4-w}Z_w) \qquad (10\text{-}1)$$

wherein $0.5 \leq x \leq 1.2$, $0 \leq y$, $x + y < 2$, $0 \leq a \leq 1.2$ and $0 \leq w \leq 1$; M is at least one selected from the group consisting of Co, Ni, Fe, Cr and Cu; Y is at least one selected from the group consisting of Li, B, Na, Al, Mg, Ti, Si, K and Ca; and Z is at least one selected from the group consisting of F and Cl.

Then, in the formula (10), it is preferable that M contains Ni, and it is preferable that M contains Ni alone. This is because in the case where M contains Ni, an active material having a high capacity can be relatively easily obtained. In the case where M is composed of Ni alone, from the viewpoint of providing an active material having a high capacity, x is preferably 0.4 or more and 0.6 or less. Further when the positive electrode active material is $LiNi_{0.5}Mn_{1.5}O_4$, it is more preferable because a high capacity of 130 mAh/g or more can be provided.

Further, examples of active materials represented by the formula (10) and operating at potentials of 4.5 V or more vs. lithium include $LiCrMnO_4$, $LiFeMnO_4$, $LiCoMnO_4$ and $LiCu_{0.5}Mn_{1.5}O_4$, and these positive electrode active materials have a high capacity. Further the positive electrode active material may have a composition obtained by mixing these active materials with $LiNi_{0.5}Mn_{1.5}O_4$.

Then, by substituting a part of Mn of these active materials by Li, B, Na, Al, Mg, Ti, Si, K, Ca or the like, an improvement in the aspect of lifetime becomes possible in some cases. That is, in the formula (10), in some cases of $0 < y$, the lifetime can be improved. Among these, the case where Y is Al, Mg, Ti or Si has a large lifetime-improving effect. Further the case where Y is Ti is more preferable because of having a lifetime-improving effect with a high capacity being held. The range of y is preferably more than 0 and 0.3 or less. Making y to be 0.3 or less facilitates suppression of a decrease in the capacity.

Further, a part of oxygen can be substituted by F or Cl. In the formula (10), by making w to be more than 0 and 1 or less, the decrease in the capacity can be suppressed.

Examples of the spinel-type positive electrode active material represented by the formula (10) include compounds containing Ni as M, such as $LiNi_{0.5}Mn_{1.5}O_4$; $LiCr_xMn_{2-x}O_4$ ($0.4 \leq x \leq 1.1$), $LiFe_xMn_{2-x}O_4$ ($0.4 \leq x \leq 1.1$), $LiCu_xMn_{2-x}O_4$ ($0.3 \leq x \leq 0.6$), $LiCo_xMn_{2-x}O_4$ ($0.4 \leq x \leq 1.1$) and the like; and solid solutions thereof.

Further, active materials operating at potentials of 4.5 V or more vs. lithium include olivine-type ones. The olivine-type positive electrode active materials include $LiMPO_4$ (M: at least one of Co and Ni), for example, $LiCoPO_4$ or $LiNiPO_4$.

Further, active materials operating at potentials of 4.5 V or more vs. lithium include Si composite oxides. Examples of the Si composite oxides include $Li_2MSiO_4$ (M: at least one of Mn, Fe and Co).

Further, active materials operating at potentials of 4.5 V or more vs. lithium also include ones having a layer structure, and examples of the positive electrode active materials having a layer structure include active materials represented by $Li(M1_xM2_yMn_{2-x-y})O_2$ (M1: at least one selected from the group consisting of Ni, Co and Fe, M2: at least one selected from the group consisting of Li, Mg and Al, $0.1 < x < 0.5$, $0.05 < y < 0.3$), $Li(M_{1-z}Mn_z)O_2$ (M: at least one of Li, Co and Ni, $0.7 \geq z \geq 0.33$), and $Li(Li_xM_{1-x-z}Mn_z)O_2$ (M: at least one of Co and Ni, $0.3 > x \geq 0.1$, $0.7 \geq z \geq 0.33$).

The specific surface area of the positive electrode active material such as the lithium manganese composite oxide represented by the above formula (10) is, for example, 0.01 to 5 $m^2/g$, preferably 0.05 to 4 $m^2/g$, more preferably 0.1 to 3 $m^2/g$, and still more preferably 0.2 to 2 $m^2/g$. By making the specific surface area in such a range, the contact area with an electrolyte solution can be regulated in a suitable range. That is, by making the specific surface area to be 0.01 $m^2/g$ or more, it becomes easy for intercalation and deintercalation of lithium ions to be carried out and the resistance can be reduced more. Then, by making the specific surface area to be 5 $m^2/g$ or less, there can be more suppressed the promotion of the decomposition of the electrolyte solution and the elution of the constituting elements of the active

material.

The central particle diameter (median diameter: $D_{50}$) of the active material such as the lithium manganese composite oxide is preferably 0.1 to 50 $\mu$m, and more preferably 0.2 to 40 $\mu$m. By making the particle diameter to be 0.1 $\mu$m or more, the elution of the constituting elements such as Mn can be suppressed more and further the deterioration due to the contact with an electrolyte solution can be suppressed more. Then, by making the particle diameter to be 50 $\mu$m or less, it becomes easy for the intercalation and deintercalation of lithium ions to be carried out and the resistance can be reduced more. The measurement of the particle diameter can be carried out by a laser diffraction scattering-type particle size distribution analyzer.

The positive electrode active material can be used singly or concurrently in two or more.

For example, the positive electrode active material may be one comprising an above-mentioned 4 V-class active material only. From the viewpoint of providing a high energy density, as described above, it is more preferable to use an active material operating at potentials of 4.5 V or more vs. lithium. The active material may further comprise a 4 V-class active material.

The binder for positive electrode is not especially limited, and includes polyvinylidene fluoride (PVdF), vinylidene fluoride-hexafluoropropylene copolymers, vinylidene fluoride-tetrafluoroethylene copolymers, styrene-butadiene copolymer rubbers, polytetrafluoroethylene, polypropylene, polyethylene, polyimide and polyamideimide. Among these, from the viewpoint of versatility and low costs, polyvinylidene fluoride is preferable. The amount of the binder for positive electrode is, from the viewpoint of the "sufficient binding capacity" and the "energy enhancement", which are in a tradeoff relationship, with respect to 100 parts by mass of the positive electrode active material, preferably 2 to 10 parts by mass.

In a positive electrode active material layer comprising the positive electrode active material, for the purpose of reducing the impedance, a conductive auxiliary material may be added. The conductive auxiliary material includes carbonaceous microparticles of graphite, carbon black, acetylene black and the like.

A positive electrode current collector is not especially limited, but is, from the viewpoint of electrochemical stability, preferably aluminum, nickel, copper, silver or an alloy thereof, or stainless steel. The shape thereof includes foils, flat plates and meshes.

(Negative electrode)

The negative electrode is not especially limited as long as comprising, as a negative electrode active material, a material capable of occluding and releasing lithium.

The negative electrode active material is not especially limited, and examples thereof include carbon materials (a) capable of occluding and releasing lithium ions, metals (b) alloyable with lithium, and metal oxides (c) capable of occluding and releasing lithium ions.

As the carbon material (a), there can be used graphite (natural graphite, artificial graphite), amorphous carbon, diamond-like carbon, carbon nanotubes, or composites thereof. Here, graphite, high in crystallinity, is high in electroconductivity and excellent in adhesiveness with a negative electrode current collector composed of a metal such as copper and the voltage flatness. By contrast, amorphous carbon, low in crystallinity, since being relatively low in volume expansion, is large in an effect of lessening the volume expansion of the whole negative electrode and hardly causes deterioration due to heterogeneity including crystal grain boundaries and defects. The carbon material (a) can be used singly or concurrently with other substances. In an exemplary embodiment of concurrent use of the other substances, the carbon material (a) is, in the negative electrode active material, preferably in the range of 2% by mass or more and 80% by mass or less, and more preferably in the range of 2% by mass or more and 30% by mass or less.

As the metal (b), there can be used metals containing, as a main substance, Al, Si, Pb, Sn, Zn, Cd, Sb, In, Bi, Ag, Ba, Ca, Hg, Pd, Pt, Te, La or the like, alloys of two or more thereof, alloys of these metals or these alloys with lithium, and the like. It is especially preferable that the metal (b) contains silicon (Si). The metal (b) can be used singly or concurrently with other substances, but is, in the negative electrode active material, preferably in the range of 5% by mass or more and 90% by mass or less, and more preferably in the range of 20% by mass or more and 50% by mass or less.

As the metal oxide (c), there can be used silicon oxide, aluminum oxide, tin oxide, indium oxide, zinc oxide, lithium oxide or composites thereof. It is especially preferable that the metal oxide (c) contains silicon oxide. This is because silicon oxide is relatively stable and hardly causes reactions with the other substances. To the metal oxide (c), there can further be added one or two or more elements selected from nitrogen, boron and sulfur, for example, in 0.1 to 5% by mass. By doing so, the electroconductivity of the metal oxide (c) can be improved. The metal oxide (c) can be used singly or concurrently with other substances, but is, in the negative electrode active material, preferably in the range of 5% by mass or more and 90% by mass or less, and more preferably in the range of 40% by mass or more and 70% by mass or less.

Specific examples of the metal oxide (c) include $LiFe_2O_3$, $WO_2$, $MoO_2$, $SiO$, $SiO_2$, $CuO$, $SnO$, $SnO_2$, $Nb_3O_5$, $Li_xTi_{2-x}O_4$ ($1 \leq x \leq 4/3$), $PbO_2$ and $Pb_2O_5$.

Examples of the negative electrode active material additionally include metal sulfides (d) capable of occluding

and releasing lithium ions. Examples of the metal sulfide (d) include SnS and $FeS_2$. Further, examples of the negative electrode active material additionally include metal lithium and lithium alloys, polyacene and polythiophene, and lithium nitrides such as $Li_5(Li_3N)$, $Li_7MnN_4$, $Li_3FeN_2$, $Li_{2.5}Co_{0.5}N$ and $Li_3CoN$.

The above negative electrode active material can be used singly or as a mixture of two or more.

Further, the negative electrode active material can have a constitution comprising the carbon material (a), the metal (b) and the metal oxide (c). Hereinafter, this negative electrode active material will be described.

It is preferable that the metal oxide (c) wholly or partially have an amorphous structure. The metal oxide (c) having an amorphous structure can suppress the volume expansion of the carbon material (a) and the metal (b), and can suppress the decomposition of an electrolyte solution. This mechanism is presumed to be such that the metal oxide (c) has an amorphous structure and thus has some influence on coating formation on the interface between the carbon material (a) and the electrolyte solution. Further it is conceivable that the amorphous structure has relatively few factors caused by heterogeneity including crystal grain boundaries and defects. Here, that the whole or a part of the metal oxide (c) has an amorphous structure can be confirmed by X-ray diffractometry (usual XRD measurement). Specifically, although in the case where the metal oxide (c) does not have any amorphous structure, a peak characteristic of the metal oxide (c) is observed, in the case where the whole of a part of the metal oxide (c) has an amorphous structure, it is observed that the peak characteristic of the metal oxide (c) becomes broad.

It is preferable that the metal oxide (c) is an oxide of a metal constituting the metal (b). It is also preferable that the metal (b) and the metal oxide (c) are silicon (Si) and silicon oxide (SiO), respectively.

It is preferable that the metal (b) is dispersed wholly or partially in the metal oxide (c). By making at least a part of the metal (b) to be dispersed in the metal oxide (c), the volume expansion as the whole negative electrode can be suppressed more, and the decomposition of the electrolyte solution can also be suppressed. Here, the fact that the whole or a part of the metal (b) is dispersed in the metal oxide (c) can be confirmed by combined use of transmission electron microscope observation (usual observation by a TEM (transmission electron microscope)) and energy-dispersive X-ray spectroscopy (usual measurement by an EDX (energy-dispersive X-ray spectroscopy)). Specifically, the cross-section of a sample containing particles of the metal (b) is observed, and the oxygen concentration of the metal (b) particles dispersed in the metal oxide (c) is measured, and it can then be confirmed that the metal constituting the metal (b) particles does not become an oxide.

As described above, it is preferable that the content rates of the carbon material (a), the metal (b) and the metal oxide (c) to the total of the carbon material (a), the metal (b) and the metal oxide (c) are 2% by mass or more and 80% by mass or less, 5% by mass or more and 90% by mass or less, and 5% by mass or more and 90% by mass or less, respectively. Further it is more preferable that the content rates of the carbon material (a), the metal (b) and the metal oxide (c) to the total of the carbon material (a), the metal (b) and the metal oxide (c) are 2% by mass or more and 30% by mass or less, 20% by mass or more and 50% by mass or less, and 40% by mass or more and 70% by mass or less, respectively.

The negative electrode active material in which the whole or a part of the metal oxide (c) has an amorphous structure and the whole or a part of the metal (b) is dispersed in the metal oxide (c) can be fabricated, for example, by a method disclosed in JP2004-47404A. That is, by carrying out a CVD treatment in an atmosphere containing an organic gas such as methane gas on the metal oxide (c), a composite can be obtained in which the metal (b) in the metal oxide (c) is nano-clustered, and the surface is coated with the carbon material (a). Also by mixing the carbon material (a), the metal (b) and the metal oxide (c) by mechanical milling, the negative electrode active material can be fabricated.

Then, the carbon material (a), metal (b) and metal oxide (c) usable are particulate ones, though being not especially limited. For example, the average particle diameter of the metal (b) can be configured so as to be smaller than the average particle diameters of the carbon material (a) and the metal oxide (c). When thus configured, since the metal (b), having a large volume change in the charge and discharge time, has relatively a small particle diameter, and the carbon material (a) and the metal oxide (c), having small volume changes, have relatively large particle diameters, the dendrite formation and the micropowderization of the alloy are more effectively suppressed. Further resultantly, in the course of charge and discharge, particles having large particle diameters, particles having small particle diameters and particles having large particle diameters occlude and release lithium ions in this order; also from this point, the generation of the residual stress and residual strain is suppressed. The average particle diameter of the metal (b) can be made to be, for example, 20 $\mu$m or less, and is preferably made to be 15 $\mu$m or less.

The average particle diameter of the metal oxide (c) is preferably 1/2 or less of that of the carbon material (a), and the average particle diameter of the metal (b) is preferably 1/2 or less of that of the metal oxide (c). Further the average particle diameter of the metal oxide (c) is more preferably 1/2 or less of that of the carbon material (a), and the average particle diameter of the metal (b) is more preferably 1/2 or less of that of the metal oxide (c). When the average particle diameters are controlled in such ranges, the lessening effect of the volume expansion of the metal and the alloy phase can be attained more effectively and there can be obtained a secondary battery excellent in the balance between the energy density, the cycle lifetime and the efficiency. More specifically, it is preferable to make the average particle diameter of the silicon oxide (c) to be 1/2 or less of that of the graphite (a), and to make the average particle diameter

of the silicon (b) to be 1/2 or less of that of the silicon oxide (c). Still more specifically, the average particle diameter of the silicon (b) can be made to be, for example, 20 μm or less, and is preferably made to be 15 μm or less.

Further as the negative electrode active material, there can be used a graphite whose surface is coated with a low-crystallinity carbon material. By coating the surface of a graphite with the low-crystallinity carbon material, even in the case of using the graphite, high in the energy density and high in the conductivity, as the negative electrode active material, a reaction of the negative electrode active material with the electrolyte solution can be suppressed. Hence, by using the graphite coated with the low-crystallinity carbon material as the negative electrode active material, the capacity retention rate of a battery can be improved and the battery capacity can be improved.

In the low-crystallinity carbon material coating the graphite surface, the ratio $I_D/I_G$ of a peak intensity $I_D$ of a D peak generated in the range of 1300 $cm^{-1}$ to 1400 $cm^{-1}$ of a Raman spectrum by a laser Raman analysis to a peak intensity $I_G$ of a G peak generated in the range of 1550 $cm^{-1}$ to 1650 $cm^{-1}$ thereof is preferably 0.08 or more and 0.5 or less. Generally, a carbon material high in crystallinity exhibits a low $I_D/I_G$ value and a carbon material low in crystallinity exhibits a high $I_D/I_G$ value. When $I_D/I_G$ is 0.08 or more, even in the case where a battery is operated at a high voltage, a reaction of the graphite with the electrolyte solution can be suppressed and the capacity retention rate of the battery can be improved. When $I_D/I_G$ is 0.5 or less, the battery capacity can be improved. Further $I_D/I_G$ is more preferably 0.1 or more and 0.4 or less.

The laser Raman analysis of the low-crystallinity carbon material can use, for example, an argon ion laser Raman analyzer. In the case of a material having a large laser absorption like a carbon material, the laser light is absorbed within several tens of nanometers from the surface. Hence, by a laser Raman analysis on the graphite whose surface is coated with the low-crystallinity carbon material, the information on the low-crystallinity carbon material disposed on the surface can substantially be acquired.

The $I_D$ value and the $I_G$ value can be determined, for example, from a laser Raman spectrum measured under the following condition.

Laser Raman spectrometer: Ramanor T-64000 (Jobin Yvon / manufactured by Atago Bussan KK)
Measurement mode: macro-Raman
Measurement arrangement: 60°
Beam diameter: 100 μm
Light source: Ar + laser/514.5 nm
Laser power: 10 mW
Diffraction grating: single 600 gr/mm
Dispersion: Single 21 A/mm
Slit: 100 μm
Detector: CCD/Jobin Yvon 1024256

The graphite coated with the low-crystallinity carbon material can be obtained, for example, by coating a particulate graphite with the low-crystallinity carbon material. The average particle diameter (volume average: $D_{50}$) of the graphite particles is preferably 5 μm or more and 30 μm or less. The graphite preferably has crystallinity and the $I_D/I_G$ value of the graphite is more preferably 0.01 or more and 0.08 or less.

The thickness of the low-crystallinity carbon material is preferably 0.01 μm or more and 5 μm or less, and more preferably 0.02 μm or more and 1 μm or less.

The average particle diameter ($D_{50}$) can be measured, for example, by using a laser diffraction scattering-type particle size analyzer, Microtrack MT3300EX (Nikkiso Co., Ltd.).

The low-crystallinity carbon material can be formed on the surface of the graphite, for example, by using a gas phase method in which a hydrocarbon such as propane or acetylene is thermally decomposed to deposit carbon. The low-crystallinity carbon material can also be formed, for example, by using a method of adhering pitch, tar or the like on the surface of the graphite and baking the resultant at 800 to 1500°C.

In the crystal structure of the graphite, the layer spacing $d_{002}$ between 002 planes is preferably 0.33 nm or more and 0.34 nm or less, more preferably 0.333 nm or more and 0.337 nm or less, and still more preferably 0.336 nm or less. Such a graphite high in crystallinity is high in the lithium occluding capacity and can improve the charge and discharge efficiency.

The layer spacing of the graphite can be measured, for example, by X-ray diffractometry.

The specific surface area of the graphite coated with the low-crystallinity carbon material is, for example, 0.01 to 20 $m^2/g$, preferably 0.05 to 10 $m^2/g$, more preferably 0.1 to 5 $m^2/g$, and still more preferably 0.2 to 3 $m^2/g$. By making the specific surface area of the graphite coated with the low-crystallinity carbon material to be 0.01 $m^2/g$ or more, since it becomes easy for intercalation and deintercalation of lithium ions to be carried out, the resistance can be reduced more. By making the specific surface area of the graphite coated with the low-crystallinity carbon material to be 20 $m^2/g$ or less, the decomposition of the electrolyte solution can be suppressed more and the elution of the constituting elements of the active material into the electrolyte solution can be suppressed more.

As the graphite to become a base material, a high-crystallinity one is preferable, and for example, artificial or

natural graphite can be used, but the graphite is not especially limited thereto. As the low-crystallinity carbon material, for example, coal tar, pitch coke or a phenolic resin is used, and the low-crystallinity carbon material can be mixed and used with a high-crystallinity carbon. The low-crystallinity carbon material of 5 to 50% by mass to the high-crystallinity carbon is mixed with the high-crystallinity carbon to thereby prepare a mixture. The mixture is heated at 150°C to 300°C, and thereafter further subjected to a heat treatment in the range of 600°C to 1500°C. Thereby, a surface-treated graphite can be obtained in which the graphite surface is coated with the low-crystallinity carbon material. The heat treatment is carried out preferably in an inert gas atmosphere such as argon, helium or nitrogen.

The negative electrode active material may comprise, in addition to the graphite coated with the low-crystallinity carbon material, other active materials.

A binder for negative electrode is not especially limited, and includes polyvinylidene fluoride (PVdF), vinylidene fluoride-hexafuoropropylene copolymers, vinylidene fluoride-tetrafluoroethylene copolymers, styrene-butadiene copolymer rubbers, polytetrafluoroethylene, polypropylene, polyethylene, polyimide and polyamideimide.

The content rate of the binder for negative electrode is, with respect to the total amount of the negative electrode active material and the binder for negative electrode, preferably in the range of 1 to 30% by mass, and more preferably in the range of 2 to 25% by mass. By making the content rate to be 1% by mass or more, the adhesiveness between the active materials or the active material and a current collector is improved and the cycle characteristics become good. Then by making the content rate to be 30% by mass or less, the ratio of the active material is improved and the negative electrode capacity can be improved.

The negative electrode current collector is not especially limited, but is, from the viewpoint of electrochemical stability, preferably aluminum, nickel, copper, silver and an alloy thereof, and stainless steel. The shape thereof includes foils, flat plates and meshes.

The negative electrode can be fabricated by forming an electrode active material layer containing the negative electrode active material and the binder for negative electrode, on the negative electrode current collector. A method of forming the negative electrode active material layer includes a doctor blade method, a die coater method, a CVD method and a sputtering method. The negative electrode current collector may be made by forming a thin film of aluminum, nickel or an alloy thereof by a method such as vapor deposition or sputtering, after the electrode active material layer is in advance formed.

(Separating layer)

The secondary battery can be made of, as its constitution, a combination of the positive electrode, the negative electrode, the separating layer and the ionic conductor. As the separating layer, a usual separator can be used and examples thereof include woven fabrics, nonwoven fabrics, and porous polymer membranes of polyolefins such as polyethylene and polypropylene, polyimide or porous polyvinylidene fluoride membranes, and ion conductive polymer electrolyte membranes. These can be used singly or in a combination thereof.

In the case of using a solid electrolyte as the ionic conductor, the solid electrolyte can be used also as the separating layer.

(Ionic conductor)

The ionic conductor is an electrolyte solution containing a supporting salt and a nonaqueous electrolyte solvent, or a solid electrolyte.

It is preferable that the nonaqueous electrolyte solvent comprise a cyclic carbonate and/or an acyclic carbonate.

Since the cyclic carbonate or the acyclic carbonate has a high relative permittivity, the addition thereof improves the dissociation of the supporting salt and makes it easy for a sufficient electroconductivity to be imparted. Further the cyclic carbonate and the acyclic carbonate, since being high in voltage withstandability and electroconductivity, is suitable to mixing with a fluorine-containing phosphate ester. Further by selecting a material having an effect of reducing the viscosity of the electrolyte solution, the ion mobility in the electrolyte solution is enabled to be improved.

The cyclic carbonate is not especially limited, but examples thereof include ethylene carbonate (EC), propylene carbonate (PC), butylene carbonate (BC) and vinylene carbonate (VC). The cyclic carbonate further includes fluorinated cyclic carbonates. Examples of the fluorinated cyclic carbonate include compounds in which a part or the whole of hydrogen atoms of ethylene carbonate (EC), propylene carbonate (PC), butylene carbonate (BC), vinylene carbonate (VC) or the like is substituted by a fluorine atom(s). As the fluorinated cyclic carbonate, there can be used, more specifically, for example, 4-fluoro-1,3-dioxolan-2-one, (cis or trans-)4,5-difluoro-1,3-dioxolan-2-one, 4,4-difluoro-1,3-dioxolan-2-one or 4-fluoro-5-methyl-1,3-dioxolan-2-one. Among the above cited compounds, the fluorinated cyclic carbonate is, from the viewpoint of the voltage withstandability and the electroconductivity, preferably ethylene carbonate, polypropylene carbonate, a compound in which these are partially fluorinated, or the like, and more preferably ethylene carbonate. The cyclic carbonate can be used singly or concurrently in two or more.

The content rate of the cyclic carbonate in the nonaqueous electrolyte solvent in the case of containing the cyclic carbonate is, from the viewpoint of an effect of enhancing the degree of dissociation of the supporting salt and an effect of enhancing the electroconductivity of the electrolyte solution, preferably 0.1% by volume or more, more preferably 5% by volume or more, still more preferably 10% by volume or more, and especially preferably 15% by volume or more in some cases. Further the content rate of the cyclic carbonate in the nonaqueous electrolyte solvent is, from the similar viewpoint, preferably 70% by volume or less, more preferably 50% by volume or less, and still more preferably 40% by volume or less.

The acyclic carbonate is not especially limited, but examples thereof include dimethyl carbonate (DMC), ethyl methyl carbonate (EMC), diethyl carbonate (DEC) and dipropyl carbonate (DPC). The acyclic carbonate further includes fluorinated acyclic carbonates. Examples of the fluorinated acyclic carbonates include compounds in which a part or the whole of hydrogen atoms of ethyl methyl carbonate (EMC), dimethyl carbonate (DMC), diethyl carbonate (DEC), dipropyl carbonate (DPC) or the like is substituted by a fluorine atom(s). Specific examples of the fluorinated acyclic carbonate include bis(fluoroethyl) carbonate, 3-fluoropropyl methyl carbonate, 3,3,3-trifluoropropyl methyl carbonate, 2,2,2-trifluoroethyl methyl carbonate, 2,2,2-trifluoroethyl ethyl carbonate, monofluoromethyl methyl carbonate, methyl 2,2,3,3-tetrafluoropropyl carbonate, ethyl 2,2,3,3-tetrafluoropropyl carbonate, bis(2,2,3,3-tetrafluoropropyl) carbonate, bis(2,2,2-trifluoroethyl) carbonate, 1-monofluoroethyl ethyl carbonate, 1-monofluoroethyl methyl carbonate, 2-monofluoroethyl methyl carbonate, bis(1-monofluoroethyl) carbonate, bis(2-monofluoroethyl) carbonate and bis(monofluoromethyl) carbonate. Among these, from the viewpoint of the voltage withstandability and the electroconductivity, preferable are dimethyl carbonate, 2,2,2-trifluoroethyl methyl carbonate, monofluoromethyl methyl carbonate and methyl 2,2,3,3-tetrafluoropropyl carbonate. The acyclic carbonate can be used singly or concurrently in two or more.

The acyclic carbonate, in the case where the number of carbon atoms of substituents added to the "-OCOO-" structure is small, has an advantage of the viscosity being low. On the other hand, when the number of carbon atoms is too large, the viscosity of the electrolyte solution becomes high and the electroconductivity of Li ions is reduced in some cases. For these reasons, the total number of carbon atoms of two substituents added to the "-OCOO-" structure of the acyclic carbonate is preferably 2 or more and 6 or less. Further in the case where substituents added to the "-OCOO-" structure contains a fluorine atom(s), the oxidation resistance of the electrolyte solution is improved. For these reasons, the acyclic carbonate is preferably a fluorinated acyclic carbonate represented by the following formula (5).

$$C_nH_{2n+1-l}F_l\text{-OCOO-}C_mH_{2m+1-k}F_k \qquad (5)$$

wherein n is 1, 2 or 3; m is 1, 2 or 3; 1 is an integer of 0 to 2n+1; k is an integer of 0 to 2m+1; and at least one of 1 and k is an integer of 1 or more.

In the fluorinated acyclic carbonate represented by the formula (5), when the amount of substitution by fluorine is small, by a reaction of the fluorinated acyclic carbonate with the positive electrode of a higher potential, the capacity retention rate of the battery decreases and gas is generated in some cases. On the other hand, when the amount of substitution by fluorine is too large, the compatibility of the acyclic carbonate with other solvents decreases and the boiling point of the acyclic carbonate is reduced in some cases. For these reasons, the amount of substitution by fluorine is preferably 1% or more and 90% or less, more preferably 5% or more and 85% or less, and still more preferably 10% or more and 80% or less. That is, it is preferable that 1, m and n of the formula (5) satisfy the following relational expression.

$$0.01 \le (l + k)/(2n + 2m + 2) \le 0.9$$

The acyclic carbonate has an effect of reducing the viscosity of the electrolyte solution, and can raise the electroconductivity of the electrolyte solution. From these viewpoints, the content of the acyclic carbonate in the nonaqueous electrolyte solvent in the case of containing the acyclic carbonate is preferably 5% by volume or more, more preferably 10% by volume or more, and still more preferably 15% by volume or more. Further the content rate of the acyclic carbonate in the nonaqueous electrolyte solvent is preferably 90% by volume or less, more preferably 80% by volume or less, and still more preferably 70% by volume or less.

Then, the content rate of the fluorinated acyclic carbonate in the case of containing the fluorinated acyclic carbonate is not especially limited, but is, in the nonaqueous electrolyte solvent, preferably 0.1% by volume or more and 70% by volume or less. When the content rate of the fluorinated acyclic carbonate in the nonaqueous electrolyte solvent is 0.1% by volume or more, the viscosity of the electrolyte solution can be reduced and the electroconductivity can be raised. An effect of enhancing the oxidation resistance is further attained. Then when the content rate of the fluorinated acyclic carbonate in the nonaqueous electrolyte solvent is 70% by volume or less, the electroconductivity of the electrolyte solution is enabled to be held high. Further the content rate of the fluorinated acyclic carbonate in the

nonaqueous electrolyte solvent is more preferably 1% by volume or more, still more preferably 5% by volume or more, and especially preferably 10% by volume or more. Then, the content rate of the fluorinated acyclic carbonate in the nonaqueous electrolyte solvent is more preferably 65% by volume or less, still more preferably 60% by volume or less, and especially preferably 55% by volume or less.

The nonaqueous electrolyte solvent may comprise a fluorine-containing phosphate ester represented by the formula (1).

[Formula 1]

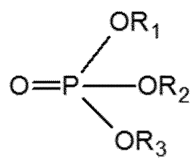

(1)

In the formula (1), $R_1$, $R_2$ and $R_3$ are each independently a substituted or unsubstituted alkyl group, and at least one of $R_1$, $R_2$ and $R_3$ is a fluorine-containing alkyl group.

Further the nonaqueous electrolyte solvent may comprise a fluorine-containing acyclic ether represented by the formula (2).

A-O-B (2)

wherein A and B are each independently a substituted or unsubstituted alkyl group, and at least one of A and B is a fluorine-containing alkyl group.

The use of the nonaqueous electrolyte solvent can suppress the volume expansion of a secondary battery and can improve the capacity retention rate. The reason is not clear but it is presumed that in the electrolyte solution containing these, the fluorine-containing phosphate ester and the fluorine-containing ether function as an oxidation-resistive solvent and an acid anhydride forms a reaction product on the electrode; thereby, the reaction of the electrolyte solution is suppressed and the volume expansion can be suppressed. It is conceivable that these synergetic actions further make the cycle characteristics better. This characteristic is a characteristic of more remarkably exhibiting the effect during use, or after storage, under long-term charge and discharge cycles and a high-temperature condition under which the decomposition of the electrolyte solution poses a large problem, and in the case of using a high-potential positive electrode active material of a secondary battery.

The content rate of the fluorine-containing phosphate ester contained in the nonaqueous electrolyte solvent and represented by the formula (1) is not especially limited, but is preferably 5% by volume or more and 95% by volume or less in the nonaqueous electrolyte solvent. When the content rate of the fluorine-containing phosphate ester in the nonaqueous electrolyte solvent is 5% by volume or more, the effect of enhancing the voltage withstandability is more improved. Further when the content rate of the fluorine-containing phosphate ester in the nonaqueous electrolyte solvent is 95% by volume or less, the ionic conductivity of the electrolyte solution is improved and the charge and discharge rate of a battery becomes better. The content rate of the fluorine-containing phosphate ester in the nonaqueous electrolyte solvent is more preferably 10% by volume or more. Then, the content rate of the fluorine-containing phosphate ester in the nonaqueous electrolyte solvent is more preferably 70% by volume or less, more preferably 60% by volume or less, especially preferably 59% by volume or less, and further especially preferably 55% by volume or less.

In the fluorine-containing phosphate ester represented by the formula (1), $R_1$, $R_2$ and $R_3$ are each independently a substituted or unsubstituted alkyl group, and at least one of $R_1$, $R_2$ and $R_3$ is a fluorine-containing alkyl group. The fluorine-containing alkyl group is an alkyl group having at least one fluorine atom. The numbers of carbon atoms of the alkyl groups $R_1$, $R_2$ and $R_3$ are each independently preferably 1 or more and 4 or less, and more preferably 1 or more and 3 or less. This is because when the number of carbon atoms of the alkyl group is 4 or less, an increase in the viscosity of the electrolyte solution is suppressed and it becomes easy for the electrolyte solution to permeate into pores in the electrode and the separator, and the ionic conductivity is improved to thereby make the current value good in the charge and discharge characteristics of a battery.

Further in the formula (1), it is preferable that all of $R_1$, $R_2$ and $R_3$ are fluorine-containing alkyl groups.

Then, it is preferable that at least one of $R_1$, $R_2$ and $R_3$ be a fluorine-containing alkyl group in which 50% or more of hydrogen atoms of the corresponding unsubstituted alkyl group is substituted by fluorine atoms. It is more preferable that all of $R_1$, $R_2$ and $R_3$ are fluorine-containing alkyl groups in which 50% or more of hydrogen atoms of the

corresponding unsubstituted alkyl groups is substituted by fluorine atoms. This is because when the content rate of fluorine atoms is high, the voltage withstandability is more improved, and also in the case of using a positive electrode active material operating at potentials of 4.5 V or more vs. lithium, the deterioration of the battery capacity after the cycle can be reduced more. Then, the ratio of fluorine atoms in a substituent(s) containing hydrogen atoms in the fluorine-containing alkyl group is more preferably 55% or more.

$R_1$ to $R_3$ each may have, in addition to fluorine atoms, a substituent(s); the substituent includes at least one selected from the group consisting of an amino group, a carboxyl group, a hydroxyl group, a cyano group and halogen atoms (for example, chlorine atom, bromine atom). Here, the above number of carbon atoms is a concept including substituents.

Examples of the fluorine-containing phosphate ester include tris(trifluoromethyl) phosphate, tris(trifluoroethyl) phosphate, tris(tetrafluoropropyl) phosphate, tris(pentafluoropropyl) phosphate, tris(heptafluorobutyl) phosphate and tris(octafluoropentyl) phosphate. Further examples of the fluorine-containing phosphate ester include trifluoroethyl dimethyl phosphate, bis(trifluoroethyl) methyl phosphate, bistrifluoroethyl ethyl phosphate, pentafluoropropyl dimethyl phosphate, heptafluorobutyl dimethyl phosphate, trifluoroethyl methyl ethyl phosphate, pentafluoropropyl methyl ethyl phosphate, heptafluorobutyl methyl ethyl phosphate, trifluoroethyl methyl propyl phosphate, pentafluoropropyl methyl propyl phosphate, heptafluorobutyl methyl propyl phosphate, trifluoroethyl methyl butyl phosphate, pentafluoropropyl methyl butyl phosphate, heptafluorobutyl methyl butyl phosphate, trifluoroethyl diethyl phosphate, pentafluoropropyl diethyl phosphate, heptafluorobutyl diethyl phosphate, trifluoroethyl ethyl propyl phosphate, pentafluoropropyl ethyl propyl phosphate, heptafluorobutyl ethyl propyl phosphate, trifluoroethyl ethyl butyl phosphate, pentafluoropropyl ethyl butyl phosphate, heptafluorobutyl ethyl butyl phosphate, trifluoroethyl dipropyl phosphate, pentafluoropropyl dipropyl phosphate, heptafluorobutyl dipropyl phosphate, trifluoroethyl propyl butyl phosphate, pentafluoropropyl propyl butyl phosphate, heptafluorobutyl propyl butyl phosphate, trifluoroethyl dibutyl phosphate, pentafluoropropyl dibutyl phosphate and heptafluorobutyl dibutyl phosphate. Examples of the tris(tetrafluoropropyl) phosphate include tris(2,2,3,3-tetrafluoropropyl) phosphate. Examples of the tris(pentafluoropropyl) phosphate include tris(2,2,3,3,3-pentafluoropropyl) phosphate. Examples of the tris(trifluoroethyl) phosphate include tris(2,2,2-trifluoroethyl) phosphate (hereinafter, abbreviated also to PTTFE). Examples of the tris(heptafluorobutyl) phosphate include tris(1H,1H-hepatafluorobutyl) phosphate. Examples of the tris(octafluoropentyl) phosphate include tris(1H,1H,5H-octafluoropentyl) phosphate. Among these, tris(2,2,2-trifluoroethyl) phosphate represented by the following formula (1-1) is preferable because having a large effect of suppressing the decomposition of the electrolyte solution at high potentials. The fluorine-containing phosphate ester can be used singly or concurrently in two or more.

[Formula 2]

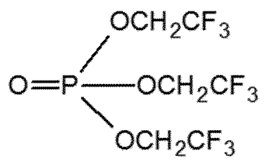

(1 − 1)

The nonaqueous electrolyte solvent can comprise a carboxylate ester.

The carboxylate ester is not especially limited, but examples thereof include ethyl acetate, methyl propionate, ethyl formate, ethyl propionate, methyl butyrate, ethyl butyrate, methyl acetate and methyl formate. The carboxylate ester further includes fluorinated carboxylate esters, and examples of the fluorinated carboxylate esters include compounds having a structure in which a part or the whole of hydrogen atoms of ethyl acetate, methyl propionate, ethyl formate, ethyl propionate, methyl butyrate, ethyl butyrate, methyl acetate or methyl formate is substituted by a fluorine atom(s). Specific examples of the fluorinated carboxylate ester include ethyl pentafluoropropionate, ethyl 3,3,3-trifluoropropionate, methyl 2,2,3,3-tetrafluoropropionate, 2,2-difluoroethyl acetate, methyl heptafluoroisobutyrate, methyl 2,3,3,3-tetrafluoropropionate, methyl pentafluoropropionate, methyl 2-(trifluoromethyl)-3,3,3-trifluoropropionate, ethyl heptafluorobutylate, methyl 3,3,3-trifluoropropionate, 2,2,2-trifluoroethyl acetate, isopropyl trifluoroacetate, tert-butyl trifluoroacetate, ethyl 4,4,4-trifluorobutyrate, methyl 4,4,4-trifluorobutyrate, butyl 2,2-difluoroacetate, ethyl difluoroacetate, n-butyl trifluoroacetate, 2,2,3,3-tetrafluoropropyl acetate, ethyl 3-(trifluoromethyl)butyrate, methyl tetrafluoro-2-(methoxy)propionate, 3,3,3-trifluoropropyl 3,3,3-trifluoropropionate, methyl difluoroacetate, 2,2,3,3-tetrafluoropropyl trifluoroacetate, 1H,1H-heptafluorobutyl acetate, methyl heptafluorobutyrate and ethyl trifluoroacetate. Among these, from the viewpoint of the voltage with standability, the boiling point and the like, preferable carboxylate esters are ethyl propionate, methyl acetate, methyl 2,2,3,3-tetrafluoropropionate and 2,2,3,3-tetrafluoropropyl trifluoroacetate. The carboxylate ester

has, similarly to the acyclic carbonates, an effect of reducing the viscosity of the electrolyte solution. Therefore, for example, the carboxylate ester can be used instead of the acyclic carbonate, and can also be used concurrently with the acyclic carbonate.

The acyclic carboxylate ester, in the case where the number of carbon atoms of substituents added to the "-COO-" structure is small, has a feature of being low in the viscosity, but is likely to be low also in the boiling point. The acyclic carboxylate ester having a low boiling point ends in evaporating in a high-temperature operation of a battery in some cases. On the other hand, when the number of carbon atoms is too large, the viscosity of the electrolyte solution is raised and the electroconductivity decreases in some cases. For these reasons, the total number of carbon atoms of two substituents added to the "-COO-" structure of the acyclic carboxylate ester is preferably 3 or more and 8 or less. Further in the case where the substituents added to the "-COO-" structure contain fluorine atoms, the oxidation resistance of the electrolyte solution can be improved. For these reasons, it is preferable that the acyclic carboxylate ester be a fluorinated acyclic carboxylate ester represented by the following formula (6).

$$C_nH_{2n+1-l}F_l\text{-COO-}C_mH_{2m+1-k}F_k \qquad (6)$$

wherein n is 1, 2, 3 or 4; m is 1, 2, 3 or 4; 1 is an integer of 0 to 2n+1; k is an integer of 0 to 2m+1; and at least one of 1 and k is an integer of 1 or more.

In the fluorinated acyclic carboxylate ester represented by the formula (6), when the amount of substitution by fluorine is small, by a reaction of the fluorinated acyclic carboxylate ester with a high-potential positive electrode, the capacity retention rate of a battery decreases and gas is generated in some cases. On the other hand, when the amount of substitution by fluorine is too large, the compatibility of the acyclic carboxylate ester with other solvents decreases and the boiling point of the fluorinated acyclic carboxylate ester is reduced in some cases. For these reasons, the amount of substitution by fluorine is preferably 1% or more and 90% or less, more preferably 10% or more and 85% or less, and still more preferably 20% or more and 80% or less. That is, it is preferable that 1, m and n of the formula (6) satisfy the following relational expression.

$$0.01 \leq (l + k)/(2n + 2m + 2) \leq 0.9$$

The content rate of the carboxylate ester in the nonaqueous electrolyte solvent in the case of containing the carboxylate ester is preferably 0.1% by volume or more, more preferably 0.2% by volume or more, still more preferably 0.5% by volume or more, and especially preferably 1% by volume or more. The content rate of the carboxylate ester in the nonaqueous electrolyte solvent is preferably 50% by volume or less, more preferably 20% by volume or less, still more preferably 15% by volume or less, and especially preferably 10% by volume or less. By making the content rate of the carboxylate ester to be 0.1% by volume or more, low-temperature characteristics can be improved and the electroconductivity can be improved more. Further by making the content rate of the carboxylate ester to be 50% by volume or less, it is mitigated that the vapor pressure becomes too high in the case where a battery is allowed to stand at a high temperature.

Further the content rate of the fluorinated acyclic carboxylate ester in the case of containing the fluorinated acyclic carboxylate ester is not especially limited, but is, in the nonaqueous electrolyte solvent, preferably 0.1% by volume or more and 50% by volume or less. When the content rate of the fluorinated acyclic carboxylate ester in the nonaqueous electrolyte solvent is 0.1% by volume or more, the viscosity of the electrolyte solution can be reduced and the electroconductivity can be raised. The effect of enhancing the oxidation resistance can also be attained. Further when the content rate of the fluorinated acyclic carboxylate ester in the nonaqueous electrolyte solvent is 50% by volume or less, the electroconductivity of the electrolyte solution can be held high and the compatibility of the electrolyte solution can be secured. Further the content rate of the fluorinated acyclic carboxylate ester in the nonaqueous electrolyte solvent is more preferably 1% by volume or more, still more preferably 5% by volume or more, and especially preferably 10% by volume or more. Then, the content rate of the fluorinated acyclic carboxylate ester in the nonaqueous electrolyte solvent is more preferably 45% by volume or less, still more preferably 40% by volume or less, and especially preferably 35% by volume or less.

The nonaqueous electrolyte solvent can comprise, in addition to the fluorine-containing phosphate ester, an alkylene biscarbonate represented by the following formula (7). Since the oxidation resistance of the alkylene biscarbonate is equal to or slightly higher than the acyclic carbonate, the alkylene biscarbonate can improve the voltage withstandability of the electrolyte solution.

[Formula 3]

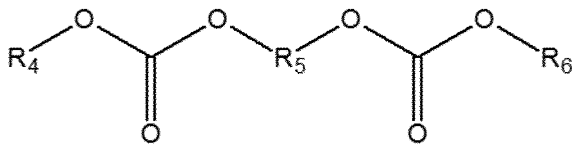

(7)

In the formula (7), $R_4$ and $R_6$ each independently denote a substituted or unsubstituted alkyl group; and $R_5$ denotes a substituted or unsubstituted alkylene group.

In the formula (7), the alkyl group includes straight-chain or branched-chain ones, and is preferably one having 1 to 6 carbon atoms, and more preferably one having 1 to 4 carbon atoms. The alkylene group is a divalent saturated hydrocarbon group, includes straight-chain or branched-chain ones, and is preferably one having 1 to 4 carbon atoms, and more preferably one having 1 to 3 carbon atoms.

Examples of the alkylene biscarbonate represented by the formula (7) include 1,2-bis(methoxycarbonyloxy)ethane, 1,2-bis(ethoxycarbonyloxy)ethane, 1,2-bis(methoxycarbonyloxy)propane and 1-ethoxycarbonyloxy-2-methoxycarbonyloxyethane. Among these, 1,2-bis(methoxycarbonyloxy)ethane is preferable.

The content rate of the alkylene biscarbonate in the nonaqueous electrolyte solvent in the case of containing the alkylene biscarbonate is preferably 0.1% by volume or more, more preferably 0.5% by volume or more, still more preferably 1% by volume or higher, and especially preferably 1.5% by volume or more. The content rate of the alkylene biscarbonate in the nonaqueous electrolyte solvent is preferably 70% by volume or less, more preferably 60% by volume or less, still more preferably 50% by volume or less, and especially preferably 40% by volume or less.

The alkylene biscarbonate is a material low in permittivity. Hence, the alkylene biscarbonate can be used, for example, instead of the acyclic carbonate, and can be used concurrently with the acyclic carbonate.

The nonaqueous electrolyte solvent can comprise an acyclic ether.

The acyclic ether is not especially limited, but examples thereof include 1,2-ethoxyethane (DEE) and ethoxymethoxyethane (EME). The acyclic ether may comprise a halogenated acyclic ether such as a fluorine-containing ether. The halogenated acyclic ether is high in oxidation resistance and is preferably used in the case of a positive electrode operating at high potentials.

The acyclic ether has, similarly to the acyclic carbonate, an effect of reducing the viscosity of the electrolyte solution. Therefore, for example, the acyclic ether can be used instead of the acyclic carbonate and the carboxylate ester, and can also be used concurrently with the acyclic carbonate and the carboxylate ester.

The content rate of the acyclic ether in the case of containing the acyclic ether is not especially limited, but is, in the nonaqueous electrolyte solvent, preferably 0.1% by volume or more and 70% by volume or less. When the content rate of the acyclic ether in the nonaqueous electrolyte solvent is 0.1% by volume or more, the viscosity of the electrolyte solution can be reduced and the electroconductivity can be raised. An effect of enhancing the oxidation resistance can further be attained. Then when the content rate of the acyclic ether in the nonaqueous electrolyte solvent is 70% by volume or less, the electroconductivity of the electrolyte solution can be held high and the compatibility of the electrolyte solution can be secured. Further the content rate of the acyclic ether in the nonaqueous electrolyte solvent is more preferably 1% by volume or more, still more preferably 5% by volume or more, and especially preferably 10% by volume or more. Then the content rate of the acyclic ether in the nonaqueous electrolyte solvent is more preferably 65% by volume or less, still more preferably 60% by volume or less, and especially preferably 55% by volume or less.

The nonaqueous electrolyte solvent can comprise a sulfone compound represented by the following formula (8).

[Formula 4]

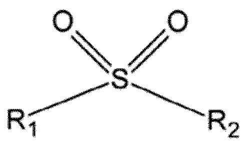

(8)

In the formula, $R_1$ and $R_2$ each independently denote a substituted or unsubstituted alkyl group; and a carbon atom of $R_1$ and a carbon atom of $R_2$ may be bound through a single bond or a double bond to form a cyclic structure.

In the sulfone compound represented by the formula (8), the number $n_1$ of carbon atoms of $R_1$ and the number $n_2$ of carbon atoms of $R_2$ are preferably $1 \leq n_1 \leq 12$ and $1 \leq n_2 \leq 12$, more preferably $1 \leq n_1 \leq 6$ and $1 \leq n_2 \leq 6$, and still more preferably $1 \leq n_1 \leq 3$ and $1 \leq n_2 \leq 3$. The alkyl group further includes straight-chain, branched-chain or cyclic ones.

In $R_1$ and $R_2$, examples of substituents include alkyl groups (for example, methyl group, ethyl group, propyl group, isopropyl group, butyl group and isobutyl group) having 1 to 6 carbon atoms, and aryl groups (for example, phenyl group and naphthyl group) having 6 to 10 carbon atoms.

In one exemplary embodiment, it is more preferable that the sulfone compound is a cyclic sulfone compound represented by the following formula (8-1).

[Formula 5]

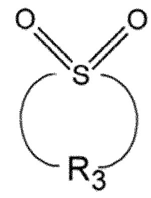

(8−1)

In the formula, $R_3$ denotes a substituted or unsubstituted alkylene group.

In $R_3$, the number of carbon atoms of the alkylene group is preferably 4 to 9, and more preferably 4 to 6.

In $R_3$, examples of substituents include alkyl groups (for example, methyl group, ethyl group, propyl group, isopropyl group and butyl group) having 1 to 6 carbon atoms, and halogen atoms (for example, chlorine atom, bromine atom and fluorine atom).

It is more preferable that the cyclic sulfone compound is a compound represented by the following formula (8-2).

[Formula 6]

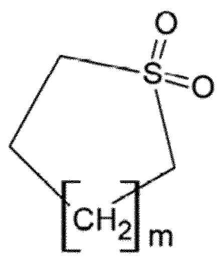

(8−2)

In the formula, m is an integer of 1 to 6.

In the formula (8-2), m is an integer of 1 to 6, and preferably an integer of 1 to 3.

Examples of the cyclic sulfone compound represented by the formula (8-1) preferably include tetramethyene sulfone (sulfolane), pentamethylene sulfone and hexamethylene sulfone. Further the cyclic sulfone compound having a substituent(s) preferably includes 3-methylsulfolane and 2,4-dimethylsulfolane.

Then the sulfone compound may be an acyclic sulfone compound. Examples of the acyclic sulfone compound include ethyl methyl sulfone, ethyl isopropyl sulfone, ethyl isobutyl sulfone, dimethyl sulfone and diethyl sulfone. Among these, preferable are ethyl methyl sulfone, ethyl isopropyl sulfone and ethyl isobutyl sulfone.

The sulfone compound, since exhibiting compatibility with other solvents such as the fluorinated ether compounds and having a relatively high permittivity, is excellent in the dissolution/dissociation actions of lithium salts. The sulfone compound can be used singly or as a mixture of two or more.

The content rate of the sulfone compound in the nonaqueous electrolyte solvent in the case of containing the sulfone compound is preferably 1% by volume or more and 75% by volume or less, and more preferably 5% by volume or more and 50% by volume or less. When the content rate of the sulfone compound is 1% by volume or more, the compatibility of the electrolyte solution is improved. When the content of the sulfone compound is too high, the viscosity of the electrolyte solution is raised and there arises a risk that particularly the capacity reduction in the charge and discharge cycle characteristics at room temperature is brought about.

The nonaqueous electrolyte solvent may comprise an acid anhydride. The content rate of the acid anhydride contained in the nonaqueous electrolyte solvent is not especially limited, but is, in the nonaqueous electrolyte solvent, generally preferably 0.01% by mass or more and 10% by mass or less, and more preferably 0.1% by mass or more and 5% by mass or less. When the content rate of the acid anhydride in the nonaqueous electrolyte solvent is 0.01% by mass or more, an effect of enhancing the capacity retention rate can be attained, and an effect of suppressing the gas generation by the decomposition of the electrolyte solution can also be attained. The content rate of the acid anhydride in the nonaqueous electrolyte solvent is more preferably 0.1% by mass or more. Then when the content rate of the acid anhydride in the nonaqueous electrolyte solvent is 10% by mass or less, a good capacity retention rate can be maintained and the amount of gasses generated by the decomposition of the acid anhydride can also be suppressed. The content rate of the acid anhydride in the nonaqueous electrolyte solvent is more preferably 5% by mass or less. The content rate of the acid anhydride in the nonaqueous electrolyte solvent is more preferably 0.5% by mass or more, and especially preferably 0.8% by mass or more. Then the content rate of the acid anhydride in the nonaqueous electrolyte solvent is more preferably 3% by mass or less, and especially preferably 2% by mass or less.

Examples of the acid anhydride include carboxylic anhydrides, sulfonic anhydrides and anhydrides of a carboxylic acid and a sulfonic acid.

It is conceivable that the acid anhydride in the electrolyte solution forms a reaction product on the electrode and suppresses the volume expansion of a battery along with the charge and discharge, and has an effect of improving the cycle characteristics. Further, it is conceivable, though being just a presumption, that since the acid anhydride as described above combines with moisture in the electrolyte solution, there is also an effect of suppressing the gas generation caused by moisture.

Examples of the acid anhydride include acyclic acid anhydrides represented by the following formula (3) and cyclic acid anhydrides represented by the following formula (4).

[Formula 7]

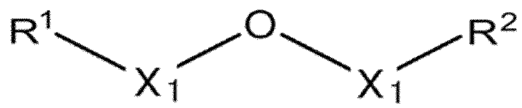

(3)

In the formula (3), two $X_1$ are each independently a carbonyl group (-C(=O)-) or a sulfonyl group ($-S(=O)_2-$); $R^1$ and $R^2$ are each independently an alkyl group having 1 to 10 carbon atoms, an alkenyl group having 2 to 10 carbon atoms, a cycloalkyl group having 3 to 10 carbon atoms, an aryl group having 6 to 18 carbon atoms or an arylalkyl group having 7 to 20 carbon atoms; and at least one hydrogen atom of $R^1$ and $R^2$ may be substituted by a halogen atom.

[Formula 8]

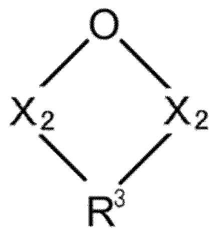

(4)

In the formula (4), two $X_2$ are each independently a carbonyl group (-C(=O)-) or a sulfonyl group ($-S(=O)_2-$); $R^3$ is an alkylene group having 1 to 10 carbon atoms, an alkenylene group having 2 to 10 carbon atoms, an arylene group having 6 to 12 carbon atoms, a cycloalkylene group having 3 to 12 carbon atoms, a cycloalkenylene group having 3 to 12 carbon atoms, or a heterocycloalkylene group having 3 to 10 carbon atoms; and at least one hydrogen atom of $R^3$ may be substituted by a halogen atom.

In the formula (3) and the formula (4), the groups represented by $R^1$, $R^2$ and $R^3$ will be described below.

In the formula (3), the alkyl group and the alkenyl group each may be a straight-chain one, or may have a branched chain(s); and the number of carbon atoms is generally 1 to 10, preferably 1 to 8, and more preferably 1 to 5.

In the formula (3), the number of carbon atoms of the cycloalkyl group is preferably 3 to 10, and more preferably

3 to 6.

In the formula (3), the number of carbon atoms of the aryl group is preferably 6 to 18, and more preferably 6 to 12. Examples of the aryl group include a phenyl group and a naphthyl group.

In the formula (3), the number of carbon atoms of the arylalkyl group is preferably 7 to 20, and more preferably 7 to 14. Examples of the arylalkyl group include a benzyl group, a phenylethyl group and a naphthylmethyl group.

In the formula (3), $R^1$ and $R^2$ are each independently more preferably an alkyl group having 1 to 3 carbon atoms or a phenyl group.

In the formula (4), the alkylene group and the alkenylene group each may be a straight-chain one, or may have a branched chain(s); and the number of carbon atoms is generally 1 to 10, preferably 1 to 8, and more preferably 1 to 5.

In the formula (4), the number of carbon atoms of the arylene group is preferably 6 to 20, and more preferably 6 to 12. Examples of the arylene group include a phenylene group, a nephthylene group and a biphenylene group.

In the formula (4), the number of carbon atoms of the cycloalkylene group is generally 3 to 12, preferably 3 to 10, and more preferably 3 to 8. The cycloalkylene group may have a single ring, or may have a structure of a plurality of rings like a bicycloalkylene group.

In the formula (4), the number of carbon atoms of the cycloalkenylene group is generally 3 to 12, preferably 3 to 10, and more preferably 3 to 8. The cycloalkenylene group may have a single ring, or may have a structure of a plurality of rings in which at least one ring has an unsaturated bond like a bicycloalkenylene group. Examples of the cycloakenylene group include divalent groups formed from cyclohexene, bicyclo[2.2.1]heptene, bicyclo[2.2.2]octene or the like.

In the formula (4), the heterocycloalkylene group denotes a divalent group in which at least one of carbon atoms on the ring of a cycloalkylene group is substituted by one or two or more kinds of heteroatoms such as sulfur, oxygen and nitrogen. The heteroalkylene group is preferably a 3- to 10-membered ring, more preferably a 4- to 8-membered ring, and still more preferably 5- or 6-membered ring.

In the formula (4), $R^3$ is more preferably an alkylene group having 1 to 3 carbon atoms, an alkenylene group having 2 or 3 carbon atoms, a cyclohexylene group, a cyclohexynylene group or a phenylene group.

The acid anhydride may be partially halogenated. Examples of the halogen atom include chlorine, iodine, bromine and fluorine, but among these, chlorine and fluorine are preferable and fluorine is more preferable.

Further the acid anhydride represented by the formula (3) or the formula (4) may have a substituent(s) other than halogen. The substituent includes alkyl groups having 1 to 5 carbon atoms, alkenyl groups having 2 to 5 carbon atoms, alkoxy groups having 1 to 5 carbon atoms, aryl groups having 6 to 12 carbon atoms, an amino group, a carboxyl group, a hydroxyl group and a cyano group, but is not limited thereto. For example, at least one of hydrogen atoms of a saturated or unsaturated hydrocarbon ring contained in $R^1$, $R^2$ or $R^3$ may be substituted by an alkyl group having 1 to 3 carbon atoms.

Examples of the carboxylic anhydride include acyclic acid anhydrides such as acetic anhydride, propionic anhydride, butyric anhydride, crotonic anhydride and benzoic anhydride; and acid anhydrides (cyclic acid anhydrides) having a ring structure, such as succinic anhydride, glutaric anhydride, maleic anhydride, phthalic anhydride, 5,6-dihydroxy-1,4-dithiin-2,3-dicarboxylic anhydride, 5-norbornene-2,3-dicarboxylic anhydride, 1,2,3,6-tetrahydrophthalic anhydride and bicyclo[2.2.2]oct-5-ene-2,3-dicarboxylic anhydride.

Example of the halide includes difluoroacetic anhydride, 3H-perfluoropropanoic anhydride, 3,3,3-trifluoropropionic anhydride, pentafluoropropionic anhydride, 2,2,3,3,4,4-hexafluoropentanedioic anhydride, tetrafluorosuccinic anhydride and trifluoroacetic anhydride. Further in addition to the halides, there can be also used acid anhydrides having another substituent, such as 4-methylphthalic anhydride.

Examples of the sulfonic anhydride include acyclic sulfonic anhydrides such as methanesulfonic anhydride, ethanesulfonic anhydride, propanesulfonic anhydride, butanesulfonic anhydride, pentanesulfonic anhydride, hexanesulfonic anhydride, vinylsulfonic anhydride and benzenesulfonic anhydride; cyclic sulfonic anhydrides such as 1,2-ethanedisulfonic anhydride, 1,3-propanedisulfonic anhydride, 1,4-butanedisulfonic anhydride and 1,2-benzenedisulfonic anhydride; and halides thereof.

Examples of anhydrides of a carboxylic acid and a sulfonic acid include acyclic anhydrides such as acetic methanesulfonic anhydride, acetic ethanesulfonic anhydride, acetic propanesulfonic anhydride, propionic methanesulfonic anhydride, propionic ethanesulfonic anhydride and propionic propanesulfonic anhydride; cyclic anhydrides such as 3-sulfopropionic anhydride, 2-methyl-3-sulfopropionic anhydride, 2,2-dimethyl-3-sulfopropionic anhydride, 2-ethyl-3-sulfopropionic anhydride, 2,2-diethyl-3-sulfopropionic anhydride and 2-sulfobenzoic anhydride; and halides thereof.

Among these, it is preferable that the acid anhydride be a carboxylic anhydride having a structure represented by [-(C=O)-O-(C=O)-] in its molecule. Examples of the carboxylic anhydride include acyclic carboxylic anhydrides represented by the following formula (3-1) and cyclic carboxylic anhydrides represented by the following formula (4-1).

[Formula 9]

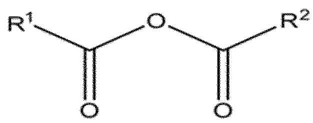

(3-1)

[Formula 10]

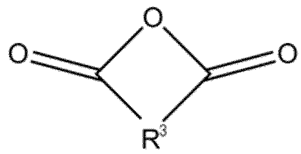

(4-1)

Here, in the formula (3-1) and the formula (4-1), groups represented by $R^1$, $R^2$ and $R^3$ are the same as the exemplifications in the above-mentioned formula (3) and formula (4).

Examples of preferable compounds of acid anhydrides include acetic anhydride, maleic anhydride, phthalic anhydride, propionic anhydride, succinic anhydride, benzoic anhydride, 5,6-dihydroxy-1,4-dithiin-2,3-dicarboxylic anhydride and 5-norbornene-tetrahydrophthalic anhydride and bicyclo[2.2.2]oct-5-ene-2,3-dicarboxylic anhydride; and acid anhydrides having a halogen or another substituent, such as difluoroacetic anhydride, 3H-perfluoropropionic anhydride, trifluoropropionic anhydride, pentafluoropropionic anhydride, 2,2,3,3,4,4-hexafluoropentanedioic anhydride, tetrafluorosuccinic anhydride, trifluoroacetic anhydride and 4-methylphthalic anhydride.

The nonaqueous electrolyte solvent may contain, in addition to the above, the following. The nonaqueous electrolyte solvent can contain, for example, γ-lactones such as γ-butyrolactone, or cyclic ethers such as tetrahydrofuran and 2-methyltetrahydrofuran. Further the nonaqueous electrolyte solvent may contain one in which a part of hydrogen atoms of these materials is substituted by a fluorine atom(s). Further the nonaqueous electrolyte solvent may contain aprotic organic solvents such as dimethyl sulfoxide, 1,3-dioxolane, formamide, acetamide, dimethylformamide, dioxolane, acetonitrile, propylnitrile, nitromethane, ethylmonoglyme, trimethoxymethane, a dioxolane derivative, methylsulfolane, 1,3-dimethyl-2-imidazolidinone, 3-methyl-2-oxazolidinone, a propylene carbonate derivative, a tetrahydrofuran derivative, ethyl ether, 1,3-propanesultone, anisole and N-methylpyrrolidone. Further the nonaqueous electrolyte solvent may contain a cyclic sulfonate ester. It is preferable that for example, a cyclic monosulfonate ester is a compound represented by the following formula (9).

[Formula 11]

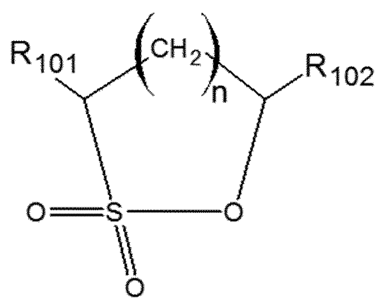

(9)

In the formula (9), $R_{101}$ and $R_{102}$ each independently denote a hydrogen atom, a fluorine atom or an alkyl group having 1 to 4 carbon atoms; and n is 0, 1, 2, 3 or 4.

Then, it is preferable that for example, a cyclic disulfonate ester is a compound represented by the following formula (9-1).

[Formula 12]

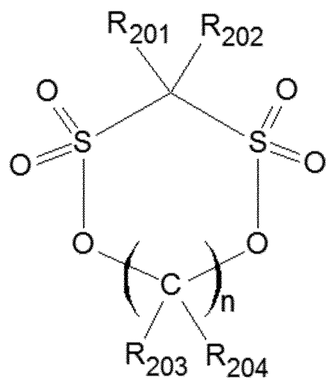

(9-1)

In the formula (9-1), $R_{201}$ to $R_{204}$ each independently denote a hydrogen atom, a fluorine atom or an alkyl group having 1 to 4 carbon atoms; and n is 0, 1, 2, 3 or 4.

Examples of the cyclic sulfonate ester include monosulfonate esters such as 1,3-propanesultone, 1,2-propanesultone, 1,4-butanesultone, 1,2-butanesultone, 1,3-butanesultone, 2,4-butanesultone and 1,3-pentanesultone, and disulfonate esters such as methylene methanedisulfonate ester and ethylene methanedisulfonate ester. Among these, from the viewpoint of the coating-formation effect, the easy availability and the costs, preferable are 1,3-propanesultone, 1,4-butanesultone and methylene methanedisulfonate ester.

The content of the cyclic sulfonate ester in the electrolyte solution is preferably 0.01 to 10% by mass, and more preferably 0.1 to 5% by mass. In the case where the content of the cyclic sulfonate ester is 0.01% by mass or more, a coating is more effectively formed on the positive electrode surface to thereby suppress the decomposition of the electrolyte solution.

Examples of the supporting salt include lithium salts such as $LiPF_6$, $LiAsF_6$, $LiAlCl_4$, $LiClO_4$, $LiBF_4$, $LiSbF_6$, $LiCF_3SO_3$, $LiC_4F_9CO_3$, $LiC(CF_3SO_2)_2$, $LiN(CF_3SO_2)_2$, $LiN(C_2F_5SO_2)_2$ and $LiB_{10}Cl_{10}$. Further the supporting salt additionally includes lithium lower-aliphatic carboxylates, chloroboran lithium, lithium tetraphenylborate, LiBr, LiI, LiSCN and LiCl. The supporting salt can be used singly or in a combination of two or more.

An ion-conductive polymer can further be added to the nonaqueous electrolyte solvent. Examples of the ion-conductive polymer include polyethers such as polyethylene oxide and polypropylene oxide, and polyolefins such as polyethylene and polypropylene. Examples of the ion-conductive polymer further include polyvinylidene fluoride, polytetrafluoroethylene, polyvinyl fluoride, polyvinyl chloride, polyvinylidene chloride, polymethyl methacrylate, polymethyl acrylate, polyvinyl alcohol, polymethacrylonitrile, polyvinyl acetate, polyvinylpyrrolidone, polycarbonate, polyethylene terephthalate, polyhexamethylene adipamide, polycaprolactam, polyurethane, polyethyleneimine, polybutadiene, polystyrene, polyisoprene and derivatives thereof. The ion-conductive polymer can be used singly or in a combination of two or more. There may also be used polymers containing various types of monomers constituting the above polymers.

The solid electrolyte is not especially specified as long as having its function, but there can be used, for example, Na-$\beta$-$Al_2O_3$, a polyethylene oxide (PEO), which is a polymer solid electrolyte, an oxide ionic conductor called LISICON (lithium superionic conductor), or a sulfide-based solid electrolyte (thio-LISICON or the like).

(Shape of the battery)

Examples of the shapes of the battery include cylindrical, rectangular, coin, button and laminate shapes. Examples of outer package materials of the battery include stainless steel, iron, aluminum, titanium, alloys thereof, and plated products thereof. As the plating, for example, nickel plating can be used.

Examples of films of laminate resin films to be used for the laminate type include aluminum, aluminum alloy and titanium foils. Examples of materials for thermally fusing portions of metal laminate resin films include thermoplastic polymer materials such as polyethylene, polypropylene and polyethylene terephthalate. Then a metal laminate resin layer and a metal foil layer are each not limited to one layer, and may have two or more layers.

The outer package can suitably be selected as long as being stable to the electrolyte solution and having a sufficient steam barrier property. For example, in the case of a layered laminate-type secondary battery, as the outer package, there can be used a laminate film of a polypropylene, a polyethylene or the like coated with aluminum or silica. Particularly from the viewpoint of suppressing the volume expansion, use of an aluminum laminate film is preferable.

An assembled battery can be made by combining a plurality of secondary batteries according to the exemplary

embodiment. The secondary battery and the assembled battery according to the exemplary embodiment can suitably be used in applications to power storage systems and car batteries.

A cross-sectional view of one example (laminate-type) of a lithium ion secondary battery according to the exemplary embodiment is illustrated in Figure 1. As illustrated in Figure 1, the lithium ion secondary battery of the present example has a positive electrode comprising a positive electrode current collector 3 composed of a metal such as an aluminum foil and a positive electrode active material layer 1 containing a positive electrode active material provided on the positive electrode current collector 3, and a negative electrode comprising a negative electrode current collector 4 composed of a metal such as a copper foil and a negative electrode active material layer 2 containing a negative electrode active material provided on the negative electrode current collector 4. The positive electrode and the negative electrode are laminated through a separator 5 composed of a nonwoven fabric, a polyolefin (polypropylene, polyethylene or the like) microporous membrane or the like so that the positive electrode active material layer 1 and the negative electrode active material layer 2 face each other. This electrode pair is accommodated in a container formed from outer packages 6, 7 composed of an aluminum laminate film. A positive electrode tab 9 is connected to the positive electrode current collector 3; a negative electrode tab 8 is connected to the negative electrode current collector 4; and these tabs are led outside the container. An electrolyte solution is injected in the container, which is then sealed. There can also be made a structure in which an electrode group in which a plurality of electrode pairs are laminated is accommodated in a container.

## Examples

Hereinafter, specific Examples to which the present invention is applied will be described, but the present invention is not any more limited to the present Examples, and may be carried out by suitably making changes and modifications without departing from its gist.

### (Example 1)

A negative electrode active material used in the present Example was an artificial graphite coated with a low-crystallinity carbon material. The artificial graphite, an electroconductive auxiliary agent being a spherical carbon material, and an SBR (styrene-butadiene rubber)-based binder were mixed in a mass ratio of 97.7 / 0.3 / 2, and dispersed in N-methylpyrrolidone to thereby prepare a negative electrode slurry. The negative electrode slurry was applied uniformly on a Cu current collector of 10 μm in thickness. The resultant was dried and compressively molded by a roll press to thereby fabricate a negative electrode.

A nonaqueous electrolyte solvent used was a solvent in which ethylene carbonate (EC) and diethyl carbonate (DEC) were mixed in a volume ratio of 3 / 7. Hereinafter, the present solvent is abbreviated also to a solvent EC/DEC. $LiPF_6$ was dissolved in a concentration of 1 mol/L in the nonaqueous electrolyte solvent to thereby prepare an electrolyte solution.

As an index of penetrativity of an ionic conductor into the electrode, a time it took for the electrolyte solution to permeate into the electrode was used. This is because it is conceivable that the faster the permeation, the broader the passages of ions are and the better the battery characteristics become. The permeating time was determined by measuring 6 samples each for a time until the nonaqueous electrolyte solution having been placed in 1 μL on the negative electrode visually disappeared, and using an average of the 4 time values excluding the shortest time and the longest time. The average penetrating time of Example 1 was 30.8 sec.

Figure 2 shows a result of a SEM observation of a cross-section of the negative electrode cross-sectionally processed by an Ar ion beam. Although voids are present between active material particles, the void density per area in the electrode plane varies depending on the places; and it is conceivable that this result affected the permeability from the electrode surface. In the figure, it seems that voids gather at portions enclosed with circles.

Then, there was evaluated the distribution in the electrode planar direction of porosity indicating a void area to a cross-sectional area of the electrode.

Figure 3 shows a dependence on the position in the electrode planar direction of the porosity determined by binarizing light and shade of the SEM image and dividing the image into solid portions and void portions, and calculating, for every one pixel in the electrode planar direction, a porosity in a region from the contact plane with the current collector to the electrode surface in the corresponding pixel. The ordinate indicates the relative value relevant to the areal porosity; and the abscissa indicates the relative position in the electrode planar direction. When there are long voids in the film thickness direction, since the porosity extremely becomes high, the graph becomes large in variation in rise and fall. In order to evaluate concentration and dispersion of voids, the values of porosities need to be smoothed in some degree of width in the electrode planar direction.

Figure 4 shows a dependence of the porosity on the position in the electrode planar direction in the case where the porosity values were smoothed in a width of 25 μm before and after object points in the electrode planar direction. The smoothing was carried out by fitting the original data to a cubic approximate expression by using the least-squares

method, and using values of the cubic approximate expression on the object points. From Figure 4, it is clear that the porosity varies along the abscissa direction (planar direction) and fluctuates up and down in the order of several tens of micrometers of the abscissa.

When the porosity is determined, boundaries between solids and voids need to be determined, but the boundary positions subtly vary depending on the determination method, therefore influencing the void area. It is conceivable that if a method is employed in which the void areas are compared in the same cross-section, since the influence on boundary positions becomes similar in the positions, the influence can be made small. Hence, use of a ratio of the porosities as an index is useful.

The measurement range in the present Example was about 425 μm; and the ratio of the maximum to the minimum of the porosities in this range was 2.39. Then, the average porosity in the whole SEM cross-sectional image was 4.7%.

There are various types of means of smoothing, which are not especially limited. For example, there is shown in Figure 9 dependences of the ratio of the minimum to the maximum of the porosities on the smoothing range in the case of using the above-mentioned method and a simple averaging. The simple averaging has a stronger tendency that a broader smoothing range gives a lower porosity ratio. It is desirable that the smoothing means to be used be selected so as to lose the distribution of the porosity as little as possible.

(Comparative Example 1)

In Comparative Example 1, an electrode was fabricated by the same method as in Example 1, except for using an SBR-based binder different from the binder used in Example 1. Figure 5 shows a result of a SEM observation of a cross-section cross-sectionally processed by an Ar ion beam. The average permeating time of Comparative Example 1 was 37.0 sec, giving a result that permeating was more difficult than in Example 1.

The average porosity of the whole SEM cross-sectional image was 6.1%, and the electrode had more voids than in Example 1. Figure 6 shows a dependence of the porosity on the position in the electrode planar direction in the case where the porosity values are smoothed in a width of 25 μm before and after object points in the electrode planar direction. The ratio of the maximum to the minimum of the porositys determined by the same method as in Example 1 was 2.04. From this, it is presumed that being long in the average permeating time was caused by being affected by the lowness of the ratio of the maximum to the minimum of the porosities.

(Comparative Example 2)

In Comparative Example 2, an electrode was fabricated by the same method as in Example 1, except for using an SBR-based binder different from the binders used in Example 1 and Comparative Example 1. Figure 7 shows a result of a SEM observation of a cross-section cross-sectionally processed by an Ar ion beam. The average permeating time of Comparative Example 1 was 40.8 sec, giving a result that permeating was more difficult than in Example 1.

The average porosity of the whole SEM cross-sectional image was 3.8%, and the electrode had less voids than in Example 1. Figure 8 shows a dependence of the porosity on the position in the electrode planar direction in the case where the porosity values are smoothed in a width of 25 μm before and after object points in the electrode planar direction. The ratio of the maximum to the minimum of the porosities determined by the same method as in Example 1 was 1.99, which was less than in Example 1.

Although the relationship between the permeating time and the porosity distribution has not been completely clear, it can easily be imagined that the presence of portions where voids gather makes easier the permeating than a uniform distribution of voids. Here, the above is just a presumption, and does not any more limit the present invention.

[Table 1]

| | Average Permeating Time (sec) | Average Porosity (%) | Ratio of Maximum/Minimum of Porosity |
|---|---|---|---|
| Example 1 | 30.8 | 4.7 | 2.39 |
| Comparative Example 1 | 37.0 | 6.1 | 2.04 |
| Comparative Example 2 | 40.8 | 3.8 | 1.99 |

With respect to the formation frequency of regions having high porosities, in the evaluation of an olivine positive

electrode in Non Patent Literature 1 (Figure 10), there is a report that the deintercalation of Li ions is caused with the reaction points as the starting points, and extends. According to this report, there are also the reaction points separated by 1 mm or more. From this, it is clear that the intercalation and deintercalation of Li ions extends across active material particles, and the extending range is 500 μm or more in radius. From this, it is conceivable that when regions having high porosities are each formed in a radius range of 500 μm, a battery can operate as a battery excellent in battery characteristics such as the charging speed, the energy density and the capacity.

In Example and Comparative Examples, distributions of the porosity were formed by changing binders. It is conceivable that the slurry state varied depending mainly on physical properties of the binders, and the aggregate state of the active material particles varied corresponding thereto, causing differences in distributions of the porosity.

Another method of forming a distribution of the porosity is conceivably the following one.

Regions having different thicknesses are formed at the time of coating, and a treatment to raise the density is carried out by applying a pressure on the entire. Since the pressure is not applied on regions having small thicknesses, voids are left much.

Methods of varying the thickness include a method in which a blade to regulate the coating amount of an active material slurry at the time of coating is provided with raised parts and recessed streaks are made at the time of coating. The methods conceivably include another method in which an electrode is pressed with a roller having ruggedness while an active material is still soft after being coated, to thereby make ruggedness on the coating. The methods further include another method in which a slurry is caused to be shrunk by being dried after being coated to thereby cause cracks on the electrode surface, and a pressure is then applied thereto. In this method, it is also effective that by applying a pressure on the electrode after a material having ionic conductivity, such as a gel, containing an electrolyte solution is made to be permeated into the cracked portions, voids are left in the cracked portions. The methods further include another method in which by coating desired regions on a current collector and further coating parts of the regions, there are provided regions where coating has been carried out in one layer and regions where coating has been carried out in two layers to thereby vary the thickness. At this time, the number of layers may be two or more; each layer may have a different thickness; and each layer may use an alternatively constituted slurry.

It is clear that the above results are effective in the claims of the present invention. It is also clear that by using the electrode according to the present invention, even in general cases, the improving effect of the battery characteristics can similarly be attained.

In the foregoing, the present invention has been described with reference to the exemplary embodiments and the Examples; however, the present invention is not limited to the exemplary embodiments and the Examples. Various modifications understandable to those skilled in the art may be made to the constitution and details of the present invention within the scope thereof.

The present application claims the right of priority based on Japanese Patent Application No. 2016-68321 filed on March 30, 2016, and the entire disclosure of which is incorporated herein by reference.

Reference Signs List

1 POSITIVE ELECTRODE ACTIVE MATERIAL LAYER
2 NEGATIVE ELECTRODE ACTIVE MATERIAL LAYER
3 POSITIVE ELECTRODE CURRENT COLLECTOR
4 NEGATIVE ELECTRODE CURRENT COLLECTOR
5 SEPARATOR
6 LAMINATE OUTER PACKAGE
7 LAMINATE OUTER PACKAGE
8 NEGATIVE ELECTRODE TAB
9 POSITIVE ELECTRODE TAB

**Claims**

**1.** An electrode for a secondary battery comprising a first electrode, a second electrode, a separating layer for spatially separating these electrodes, and an ionic conductor,
the electrode comprising a current collector and an active material-containing film on the current collector,
wherein a porosity per volume of the active material-containing film is 25% or less; and one or more high-porosity regions where a ratio of a maximum porosity to a minimum porosity by a trend analysis of porosity per area in the film thickness direction of an electrode cross-section is 2.2 or more are present within a range of 500 μm in radius

on the electrode plane.

2. The electrode according to claim 1, wherein with respect to the electrode cross-section, a trend distribution of porosity per area in the film thickness direction of the cross-section of the electrode with respect to positions in the electrode planar direction is smoothed in a range of 35 to 70 μm in the electrode planar direction.

3. The electrode according to claim 2, wherein means of the smoothing is an approximation to a cubic expression using a least-squares method.

4. A method for manufacturing an electrode according to any one of claims 1 to 3, the method comprising:

a step of coating a slurry comprising an active material particle, a binder and a solvent on a current collector, wherein regions having different thicknesses are formed in the coating step; and
a step of applying a pressure on the entire surface of a coated film to raise a density thereof followed by the coating step.

5. The manufacturing method according to claim 4, wherein the regions having different thicknesses are formed by regulating an amount of the slurry to be coated by using a blade having ruggedness at the time of coating.

6. The manufacturing method according to claim 4, wherein an identical or different slurry is partially double-coated to thereby form the regions having different thicknesses in the coating step.

7. A method for manufacturing an electrode according to any one of claims 1 to 3, the method comprising:

a step of coating a slurry comprising an active material particle, a binder and a solvent on a current collector; and
a step of applying a pressure on the electrode by a roller having ruggedness followed by the coating step.

8. A method for manufacturing an electrode according to any one of claims 1 to 3, the method comprising:

a step of coating a slurry comprising an active material particle, a binder and a solvent on a current collector;
a step of drying a coated film to generate cracks on a surface of the coated film followed by the coating step; and
a step of applying a pressure on the entire surface of the coated film after generating cracks.

9. A secondary battery, comprising: a first electrode; a second electrode; a separating layer to spatially separate these electrodes; and an ionic conductor,
wherein an electrode according to any one of claims 1 to 3 is used for at least one of the first electrode and the second electrode.

10. The secondary battery according to claim 9, wherein one of the first electrode and the second electrode is a positive electrode comprising an active material capable of intercalating and deintercalating_lithium ions, and the other thereof is a negative electrode comprising a graphite-based active material.

FIG. 1

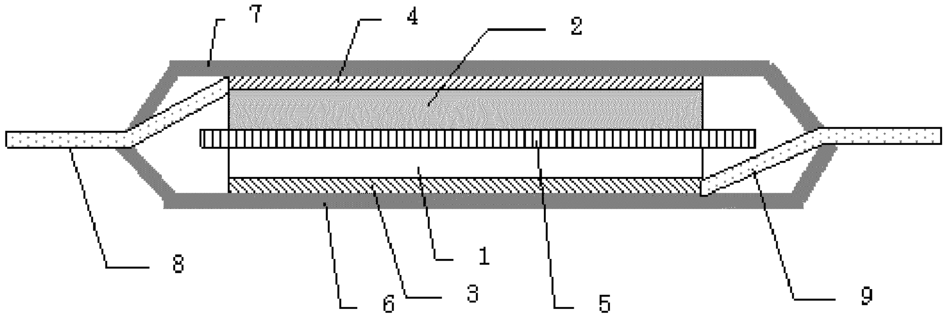


FIG. 2

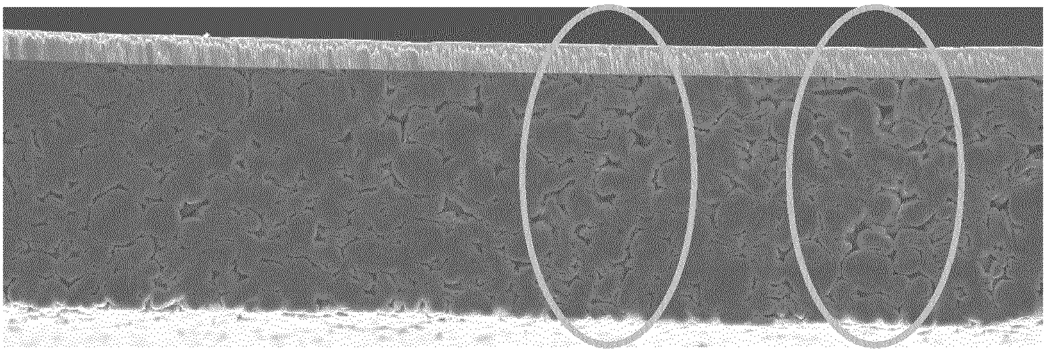

FIG. 3

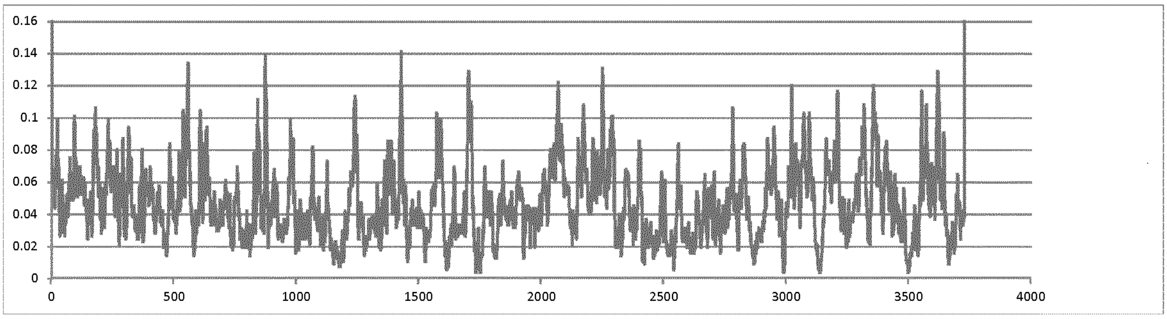
0.16
0.14
0.12
0.1
0.08
0.06
0.04
0.02
0
0
500
1000
1500
2000
2500
3000
3500
4000

FIG. 4

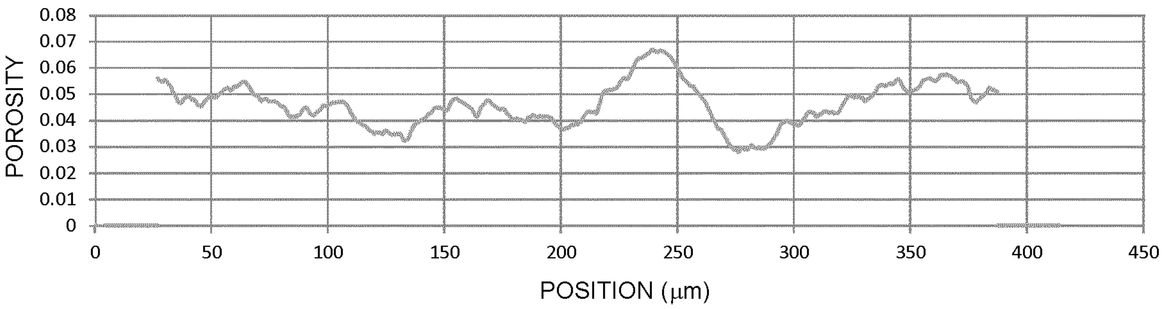
POROSITY
0.08
0.07
0.06
0.05
0.04
0.03
0.02
0.01
0
0
50
100
150
200
250
300
350
400
450
POSITION (μm)

FIG. 5

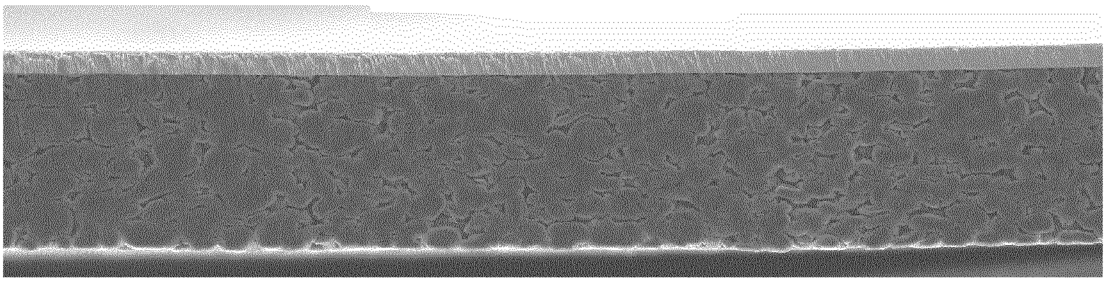

FIG. 6

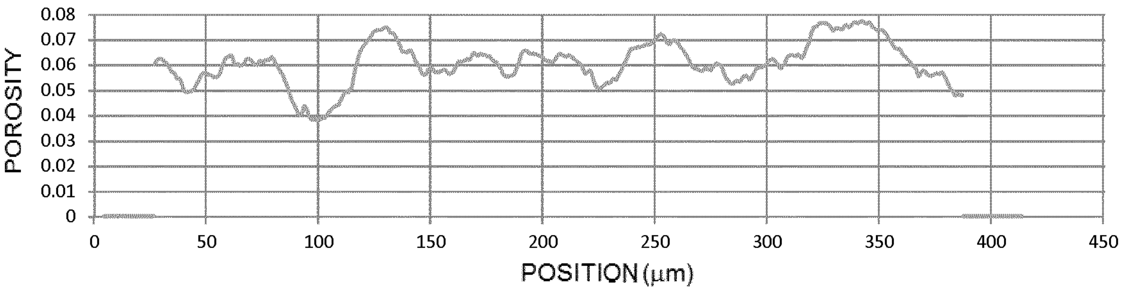
POROSITY
0.08
0.07
0.06
0.05
0.04
0.03
0.02
0.01
0
0
50
100
150
200
250
300
350
400
450
POSITION (μm)

FIG. 7

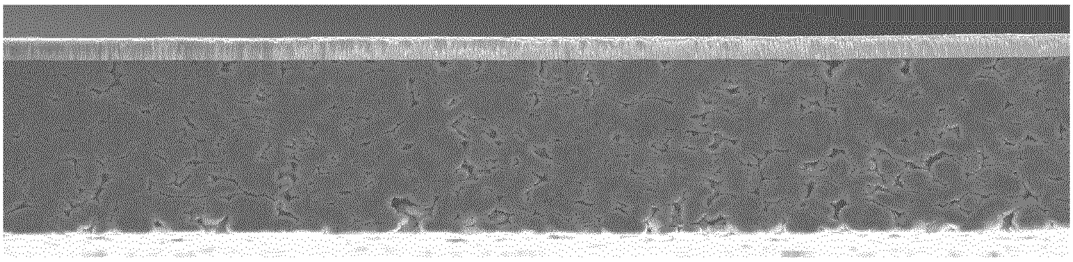

FIG. 8

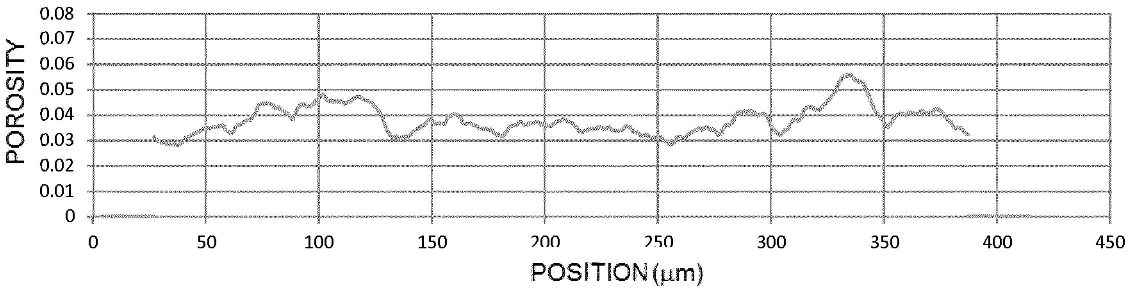
POROSITY
0.08
0.07
0.06
0.05
0.04
0.03
0.02
0.01
0
0
50
100
150
200
250
300
350
400
450
POSITION (μm)

FIG. 9

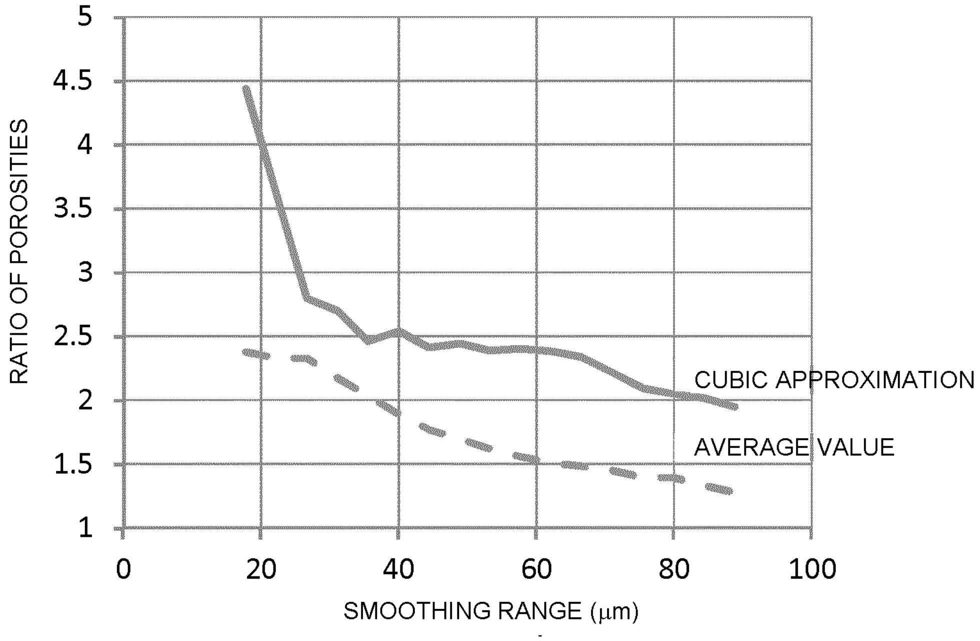
5
4.5
4
3.5
3
2.5
2
1.5
1
RATIO OF POROSITIES
0
20
40
60
80
100
SMOOTHING RANGE (μm)
CUBIC APPROXIMATION
AVERAGE VALUE

FIG. 10

GROWTH PROCESS OF REACTION DISTRIBUTION (PLANAR CROSS-SECTIONAL DIRECTION)

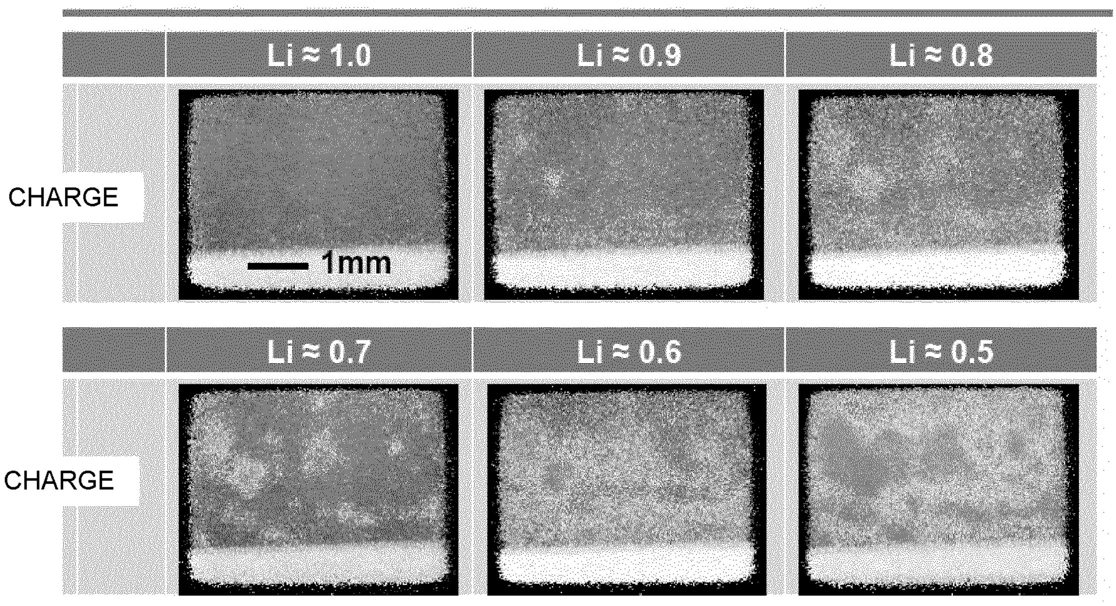


Aichi Synchrotron Radiation Center
Meeting for Presentation of Results on Subjects for Opened Gratuitous Utilization (March 28, 2014)
XAFS ANALYSIS BY SPRING-8

## INTERNATIONAL SEARCH REPORT

International application No.
PCT/JP2017/011260

**A. CLASSIFICATION OF SUBJECT MATTER**

*H01M4/13*(2010.01)i, *H01M4/02*(2006.01)i, *H01M4/04*(2006.01)i, *H01M4/139*(2010.01)i, *H01M10/0525*(2010.01)i

According to International Patent Classification (IPC) or to both national classification and IPC

**B. FIELDS SEARCHED**

Minimum documentation searched (classification system followed by classification symbols)
H01M4/13, H01M4/02, H01M4/04, H01M4/139, H01M10/0525

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2013-8523 A (Hitachi Vehicle Energy, Ltd.), 10 January 2013 (10.01.2013), entire text (Family: none) | 1-10 |
| A | JP 2014-32759 A (Nissan Motor Co., Ltd.), 20 February 2014 (20.02.2014), entire text (Family: none) | 1-10 |
| A | JP 2006-139986 A (Mitsui Mining & Smelting Co., Ltd.), 01 June 2006 (01.06.2006), entire text (Family: none) | 1-10 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 15 June 2017 (15.06.17) | 27 June 2017 (27.06.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 10064514 A
- JP 2009123707 A
- JP 2004047404 A
- JP 2016068321 A


### Non-patent literature cited in the description


- Analysis of Lithium Ion Battery Material by Synchrotron XAFS Method. **HISAO YAMASHIGE.** Meeting for Presentation of Results on Subjects for Opened Gratuitous Utilization by Aichi Synchrotron Radiation Center. Toyota Motor Corp., Material Technology Development Department, 28 March 2014